# EUROPEAN PATENT SPECIFICATION

(11) **EP 0 420 112 B1**
(45) Date of publication and mention of the grant of the patent: **23.12.1998**
(21) Application number: 90118321.0
(22) Date of filing: 24.09.1990
(51) Int. Cl.: G11B 7/00, G11B 11/10, G11B 23/03

(54) **Magneto-optical disk medium**
Magnetooptische Diskette
Support d'enregistrement magnéto-optique à disque

(30) Priority: 27.09.1989 JP 249154/89; 06.12.1989 JP 315289/89
(43) Date of publication of application: 03.04.1991
(73) Proprietor: Hitachi, Ltd., Chiyoda-ku, Tokyo 101 (JP)
(72) Inventor: Sato, Yoshio, Hitachi-shi (JP); Tsuboi, Nobuyoshi, Naka-gun, Ibaraki-ken (JP); Minemura, Hiroyuki, Hitachi-shi (JP); Andoh, Hisashi, Hitachi-shi (JP); Nagai, Masaichi, Hitachi-shi (JP); Ikuta, Isao, Iwaki-shi (JP); Kato, Yoshimi, Takahagi-shi (JP); Maeda, Yoshihito, Mito-shi (JP); Sugita, Tatsuya, Hitachi-shi (JP); Sugita, Yutaka, Tokorozawa-shi (JP)
(74) Representative: Beetz & Partner Patentanwälte

(56) References cited:
- EP-A- 0 116 936
- EP-A- 0 130 364
- EP-A- 0 275 657
- EP-A- 0 292 309
- NL-A- 8 800 733
- US-A- 4 592 042
- PATENT ABSTRACTS OF JAPAN vol. 9, no. 221 (P-386)7 September 1985 & JP-A-60 079 581 ( DAINIPPON ) 7 May 1985
- PROCEEDINGS OF SPIE vol. 899, 1988, BELLINGHAM, WASHINGTON pages 34 - 38; R E UBER AND M H KRYDER: 'Prototye magneto-optical disk drive'
- PROCEEDINGS OF SPIE vol. 420, 1983, BELLINGHAM, WASHINGTON pages 39 - 52; J W WHEELER: 'Web-based optical disk assemblies'
- PATENT ABSTRACTS OF JAPAN vol. 13, no. 085 (P-834)27 February 1989 & JP-A-63 268 145 ( MATSUSHITA ) 4 November 1988

## Description

The present invention relates to a magneto-optical disk medium as defined in the preamble of the claim 1.

The magneto-optical disk medium according to the present invention is designed to be used as a portable recording medium which is suitable for reading, writing, erasing and/or overwriting. Specifically, it may be formed as a thin rectangular card.

A magneto-optical disk medium of the kind mentioned above is known from EP-A--0 292 309. The said known disk medium comprises a protective casing in which an information-carrying medium is housed which includes a transparent substrate carrying three ferromagnetic layers which differ from each other as to the Curie temperatures and the coercive forces of their materials. In operation, the said three layers are subjected to different external magnetic fields and are irradiated by a modulated laser beam through said transparent substrate so as to record or read information data. Special emphasis is placed on the values of the Curie temperatures and the coercive forces of the several layers relative to each other, but no data are given as to the geometrical dimensions.

Another magneto-optical disk medium is described in JP-A-60 079581. The said known disk medium is a card which comprises a recording medium sheet inserted between coating materials and connectable to an external driving source for rotary movement. The coating materials include apertures which are closed with transparent sheet materials to provide access to the recording medium sheet for a laser beam for information recording or reading. No data are given as to the structure of the recording medium sheet or as to the general dimensions of the card.

Further, in JP-A-62 175948 a magneto-optical disk memory is described which is capable of overwriting recorded information by means of laser power modulation and where, in addition, a permanent magnet for initializing a magneto-optical disk and a permanent magnet for writing are fixed to an optical disk memory device, and furthermore, an optical head is positioned on an opposite side to the magneto-optical disk. Moreover, in the magneto-optical disk, such a method is adopted that an optical disk medium is fixedly adhered onto a substrate having a thickness of approximately 1.2 mm so as to have light incident from the substrate side as a countermeasure against dust attaching thereto, and the optical disk is contained in a protective case for transportation, thus, requiring a thickness of 6 to 10 mm as the whole optical disk. Because of the fact that the substrate requires to have a thickness of 1.2 mm and the permanent magnet for initialization and the permanent magnet for recording are fixed on the opposite side with respect to the optical head and the optical disk in a conventional magneto-optical disk as described above, the thickness of this permanent magnet portion is added, thus not only causing it difficult to miniaturize the optical disk, in particular to form it in a credit card ordered size, but also limiting to form a thin optical disk memory device.

On the other hand, an example in which a disk magneto-optical medium capable of overwriting on a glass substrate having a thickness of 1.2 mm is incorporated in a cartridge, a permanent magnet for application of initializing auxiliary magnetic field is incorporated in the cartridge, and a permanent magnet for recording is installed in a recording device is disclosed in JP-A-64-46247. However, it is difficult to miniaturize and thin an optical disk, in particular to form it in a credit card ordered size when the cartridge is included because the thickness of 1.2 mm is required for the substrate. Further, since the permanent magnet for recording is fixed on the opposite side with respect to the optical head and the optical disk, the thickness of this permanent magnet portion is added, and thus, there has been a limit to make the optical disk memory device thinner. Moreover, there is also such a problem that the laser portion of the optical disk is liable to be damaged because the optical disk is exposed when the window of the cartridge cover is opened.

When a disk capable of reading, writing, erasing, and/or overwriting by a laser power modulation is used as a memory for a lap top computer or other portable information processors, it is desirable to be rectangular in configuration and to be in a card form or a sheet form in point of thickness which is provided with a protective case from the viewpoint of portability. In a conventional optical disk, however, because of such a fact that the substrate requires a thickness of 1.2 mm as a countermeasure against sticking dust, and particularly in the case of magneto-optical recording, the permanent magnet for initialization and the permanent magnet for recording are fixed on the opposite side of the optical disk with respect to the optical head. Thus, the thickness of this permanent magnet portion is added, which creates a limit to form a thin film, and it has been impossible to use such a conventional optical disk in a lap top computer and a portable optical disk memory device.

It is an object of the present invention to provide a magneto-optical disk medium which is so slim that its casing can be made in approximately the thickness of a credit card.

According to the present invention the said object is achieved by a magneto-optical disk medium defined in the claim 1. Advantageous further developments of the invention are indicated in the subclaims.

With a disk medium according to the present invention a shutter is not required, the recoding medium can be sealed tightly within its casing. Therefore, it is not possible that dust can come into contact with the recording medium, and the space required between the recording medium and casing may be considerably reduced.

With a disk medium according to the present invention, it is possible to provide an information processor which protects the disk against dust and dirt and is able to prevent read mistake caused by stuck dust and dirt at the same time. Furthermore, it is possible to realize a thin lap top computer having a memory of large capacity, a still camera of a large capacity and a medical portable personal data base having a large capacity memory by utilizing a disk-in-card of the present invention.

### BRIEF DESCRIPTION OF THE DRAWINGS

Fig. 1 is a block diagram showing a device composition of an embodiment of the present invention;
Fig. 2A is a plan view showing an embodiment of a magneto-optical disk-in-card of the present invention;
Fig. 2B is a sectional view taken along arrow marks IIB-IIB in Fig. 2A;
Fig. 2C is a sectional view taken along arrow marks IIC-IIC in Fig. 2A;
Fig. 2D is an enlarged sectional view of the section shown in Fig. 2C;
Fig. 3 is a sectional view showing another embodiment of Fig. 2D;
Fig. 4 is a plan view showing an optical disk-in-card;
Fig. 5A is a plan view showing an optical disk in the optical disk-in-card;
Fig. 5B is a sectional view taken along arrow marks VB-VB in Fig. 5A;
Fig. 6 is a sectional view of a magneto-optical disk;
Fig. 7 is an enlarged sectional view showing an optical disk-in-card;
Fig. 8 is an enlarged sectional view showing another embodiment of the optical disk-in-card;
Fig. 9 is an explanatory diagram of principles of write/read/erase of a phase-change optical disk;
Fig. 10 is a diagram showing a crystallizing speed of an In-Sb-Te write medium which is an example of a material for a phase-change optical disk;
Fig. 11 and Fig. 12 are sectional views showing a multilayer film composition of the optical disk;
Fig. 13 is an explanatory view of a modulation method of laser power;
Fig. 14A is a composition diagram showing an embodiment of an optical head for a phase-change optical disk;
Fig. 14B is a side view of the optical head shown in Fig. 14A;
Fig. 15 is a composition diagram showing still another embodiment of the optical head for a magneto-optical disk;
Fig. 16 is an explanatory diagram of principles of initialization, write, read and overwrite of a magneto-optical disk;
Fig. 17 and Fig. 18 are sectional views showing multilayer compositions of the magneto-optical disk;
Fig. 19 is a block diagram showing an embodiment of a drive circuit system;
Fig. 20 is a plan view showing another magneto-optical disk-in-card;
Fig. 21A is a plan view showing another embodiment of the optical disk-in-card;
Fig. 21B and Fig. 21C are respective side views of the optical disk-in-card shown in Fig. 21A;
Fig. 22A is a sectional view of an optical disk-in-card taken along arrow marks XXIC-XXIC in Fig. 21A;
Fig. 22B is an enlarged sectional view shown with an arrow mark F in Fig. 22A;
Fig. 22C is an enlarged sectional view shown with an arrow mark G in Fig. 22A;
Fig. 23A is a plan view of another optical disk;
Fig. 23B is a sectional view taken along arrow marks XXIIIB XXIIIB in Fig. 23A;
Fig. 24 and Fig. 25 are sectional views showing examples in which countermeasures of preventing mixing of dust and dirt into recording areas of the optical disk;
Fig. 26A is a plan view showing another embodiment of an optical disk-in-card;
Fig. 26B thru Fig. 26D are respective side views of the optical disk-in-card shown in Fig. 26A;
Fig. 27 is a plan view showing another embodiment of a magneto-optical disk-in-card;
Fig. 28A is a plan view showing still another embodiment of the optical disk-in-card;
Fig. 28B and Fig. 28C are respective side views of the magneto-optical disk-in-card shown in Fig. 28A;
Fig. 29A is a sectional view taken along arrow marks XXVIIIC-XXVIIIC shown in Fig. 28A;
Fig. 29B is an enlarged sectional view shown with an arrow mark K in Fig. 29A;
Fig. 29C is an enlarged sectional view shown with an arrow mark L in Fig. 29A;
Fig. 30 and Fig. 31 are sectional views showing another examples in which countermeasures for preventing mixing of dust and dirt into the recording area of an optical disk are taken;
Fig. 32A is a plan view showing another embodiment of an optical disk-in-card;
Fig. 32B thru Fig. 32D are respective side views of the optical disk-in-card shown in Fig. 32A;
Fig. 33 is a block diagram showing a composition in case, the optical disk-in-card is applied to a lap top computer;
Fig. 34 is a block diagram showing a composition in case, the optical disk-in-card is applied to a camera;
Fig. 35 is a block diagram showing a composition in case, the optical disk-in-card in applied as a memory for a terminal of a large computer and an interface of a lap top computer;
Fig. 36 is a plan view showing another embodiment of the optical disk-in-card;
Fig. 37 is a block diagram showing another device composition of the present invention;
Fig. 38 is a plan view showing another embodiment of the optical disk-in-card;
Fig. 39A is a plan view showing still another embodiment of the optical disk-in-card;
Fig. 39B is a sectional view taken along arrow marks XXXIXB-XXXIXB in Fig. 39A;
Fig. 40A is a plan view showing another embodiment of the optical disk-in-card;
Fig. 40B and Fig. 40C are respective side views of the optical disk-in-card shown in Fig. 40A;
Fig. 41 is a plan view showing another embodiment of the optical disk-in-card;
Fig. 42A is a plan view showing still another embodiment of the optical disk-in-card;
Fig. 42B is a sectional view taken along arrow marks XLIIB-XLIIB in Fig. 42A;
Fig. 43A is a plan view showing another embodiment of the optical disk-in-card; and
Fig. 43B and Fig. 43C are respective side views of the magneto-optical disk-in-card shown in Fig. 43A.

### DETAILED DESCRIPTION OF THE EMBODIMENTS

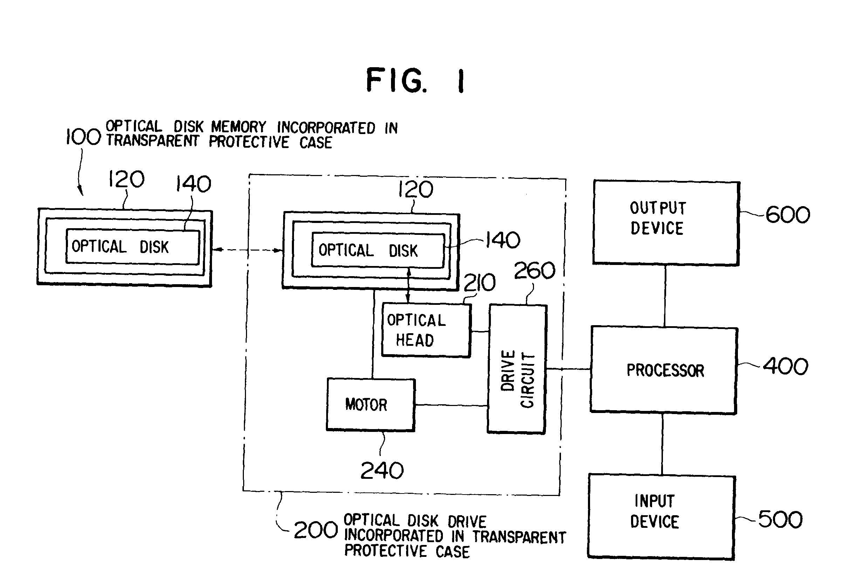

An embodiment of the present invention will be described hereafter with reference to drawings. Fig. 1 shows a conceptual diagram of an information processor of the present invention.

The information processor of the present invention is composed of an optical disk-in-card 100 consisting of a transparent protective case 120 housing at least one recording layer of a rotatable disk type optical disk memory 140 of a recording layer, an optical disk drive, a processor 400, an input means 500 and an output means 600.

The magneto-optical disk-in-card 100 incorporated in a transparent protective case is composed of a transparent protective case 120 housing a magneto-optical disk memory 140, a first magnetic field application means for initializing an auxiliary recording layer and a second magnetic field application means for recording information a recording layer, and is detachable from the disk drive 200.

Furthermore, an optical disk memory such as a phase-change type, write-once type, and/or read-only type may also be used in place of the magneto-optical disk memory 140. In this case, the optical disk is incorporated in a transparent protective case is composed of an optical disk and a transparent protective case.

Further, the disk drive 200 is composed of an optical head 210 for write, read and overwrite, a motor 240 for rotating the optical disk 140 and a drive circuit 260 for controlling the optical head 210 and the motor 240. The optical head 210 is provided with an objective lens 219 for irradiating the optical disk 140 with light.

The drive circuit 260 controls the rotation speed of the motor 240 and also fulfils functions of modulation of data for write/overwrite and demodulation of data for read in accordance with an instruction from the processor 400.

Further, the processor 400 performs arithmetic processing or write/read in and from the magneto-optical disk 140 in accordance with an instructions from the input means 500, and outputs the written information in the magneto-optical disk 140 or processing results through the output means 600.

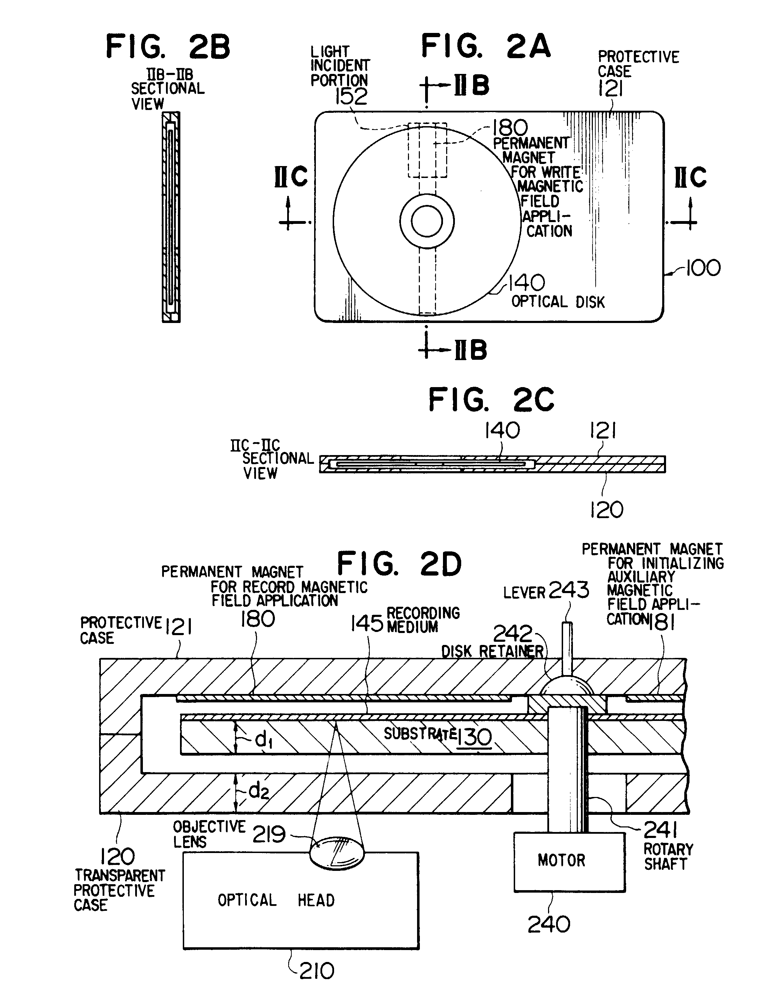

Fig. 2A, Fig. 2B, Fig. 2C and Fig. 2D show an embodiment of the magneto-optical disk-in-card incorporated in a transparent protective case best suited for executing the present invention. Besides, the optical head 210 and the motor 240 for rotating the optical disk 140 are shown additionally in the detailed portion of the magneto-optical disk-in-card. At the terminal portion of a rotary shaft 241 extending from the motor 240, a disk retainer 242 and a level 243 are provided so as to fix the optical disk 140.

As shown in respective figures, the magneto-optical disk 140 is incorporated in a protective case 120, 121 of a credit card size in the magneto-optical disk-in-card 100 of the present embodiment. A permanent magnet 180 for magnetic field application for initializing the auxiliary recording layer and a permanent magnet 181 for magnetic field application for writing in the recording layer are formed on the disk in the transparent protective case 121. It is better for the permanent magnet for magnetic field application for initialization and the permanent magnet for magnetic field application for recording to be fixed both at a length a little longer than the radial length of the recording area of the magneto-optical disk of the magneto-optical disk memory card because initialization and writing can be executed up to the innermost periphery or the outermost periphery of the disk. Further, configurations of the permanent magnet for magnetic field application for initialization and the permanent magnet for magnetic field application for recording may be rectangular when the rotation speed of the disk is as low as 1,800 rpm. When the rotation of the disk reaches 3,600 rpm and higher, it is more preferable to form the configurations of the permanent magnet for magnetic field application for initialization and the permanent magnet for magnetic field application for writing in sectors so that the circuit arc is small at the inner periphery of the disk and the circular arc is large at the outer periphery of the disk for initialization and writing. The manufacture of the permanent magnet for magnetic field application for initialization and the permanent magnet for magnetic field application for writing may be made by cutting out of a bulk material and adhering with adhesives, or by any of thin film forming methods such as a vacuum deposition method, a sputtering method and an ion beam sputtering method.

At least a light beam incident portion 152 of the protective case is composed of a transparent plate in the magneto-optical disk 140.

In a conventional magneto-optical disk unit, a window of the protective case was opened so that light is directly incident to an optical disk when light was incident. Therefore, dust and dirt entered through the window for light incidence, and it was required to use a transparent substrate having a thickness of 1.2 mm for the substrate as a countermeasure thereagainst.

On the contrary, since the light incident portion 152 is covered with the transparent protective plate 120 in the magneto-optical disk-in-card of the present invention, dust and dirt will never stick directly to the optical disk. Accordingly, the substrate for supporting the optical disk medium needs not have the thickness of 1.2 mm. According to the present invention, dust in air does not stick to a substrate 130 and a reading medium 145 consisting of an auxiliary recording layer and recording layer, thus producing an effect that the substrate having a thickness of 1.2 mm which has been heretofore deemed indispensable may be made thinner by forming the total of the plate thickness d₂ of the transparent protective case 120 and the plate thickness d₁ of the substrate 130 in approximately 1.2 mm.

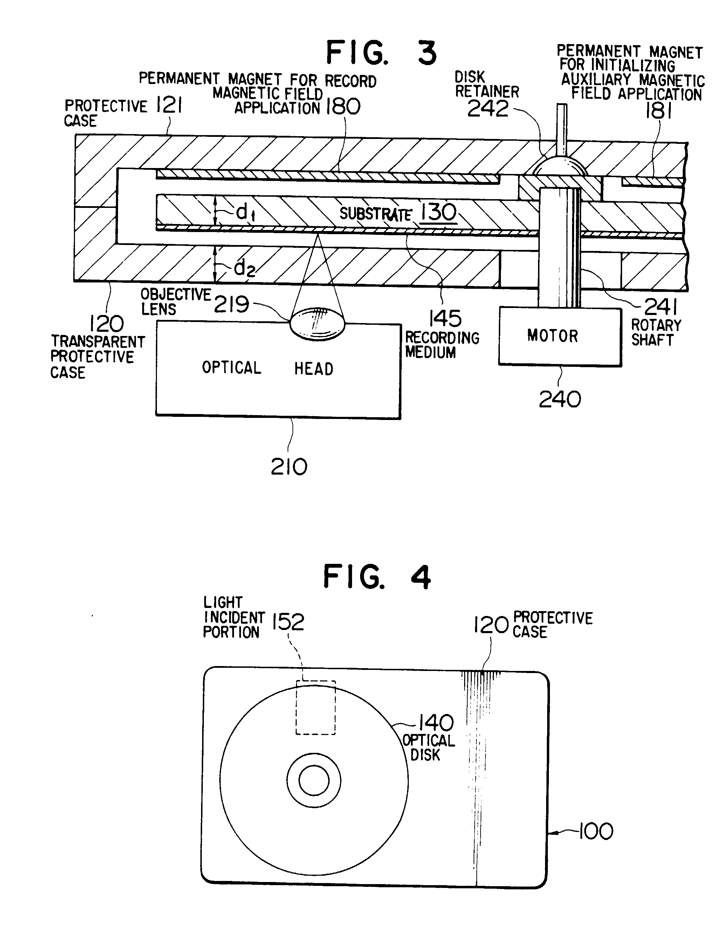

Fig. 3 shows another embodiment in place of Fig. 2D. When the thickness d₂ of the transparent protective plate is made at approximately 1.2 mm, it is not required to have light incident from the substrate 130 side, thus making it possible to use for the substrate 130 a metal, a metallic foil and an organic material having no light permeability such as an aluminum foil made thinner by cold processing and an alloy foil thereof, a stainless steel foil, and a titanium foil or an alloy foil thereof.

Further, the magneto-optical disk is fixed to the rotary shaft 241 and rotated, but is retained by the disk retainer 242 for stable rotation. Besides, the protective case 121 having no light incident portion, it may be either transparent or opaque.

Moreover, in the magneto-optical disk-in-card of the resent invention, the magneto-optical disk 140 is not fixedly attached to the protective case 120, 121, but is made rotatable freely.

Fig. 4 shows an embodiment of an optical disk memory such as a phase-change type, write-once type, and/or read-only type contained in a transparent protective case (hereafter referred to as an "optical disk-in-card") best suited to realize an optical disk memory of the present invention, and the section of this figure is the same as Fig. 2C. Referring to Fig. 2C, the optical disk 140 incorporated in the protective case 120, 121 each in a card in a card size in the optical disk-in-card 100. Here, at least the light beam incident portion 152 of the protective case is formed of a transparent protective plate in the optical disk 140.

In a conventional optical disk unit, the window of the protective case was also opened like a magneto-optical disk unit so as to have light incident directly to the optical disk when light was incident. Therefore, since dust and dirt entered through the window for light incidence, it has been required to use a transparent substrate having a thickness of 1.2 mm for the substrate as a countermeasure.

On the contrary, since the light incident portion 152 is covered with the transparent protective plate 120 in the optical disk memory of the present invention, dust and dirt will never stick directly to the optical disk, thus the thickness of the substrate for supporting the optical disk medium needs not be 1.2 mm.

Further, in the optical disk memory of the present invention, the optical disk 140 is not fixedly attached to the protective case 120, but is made rotatable freely.

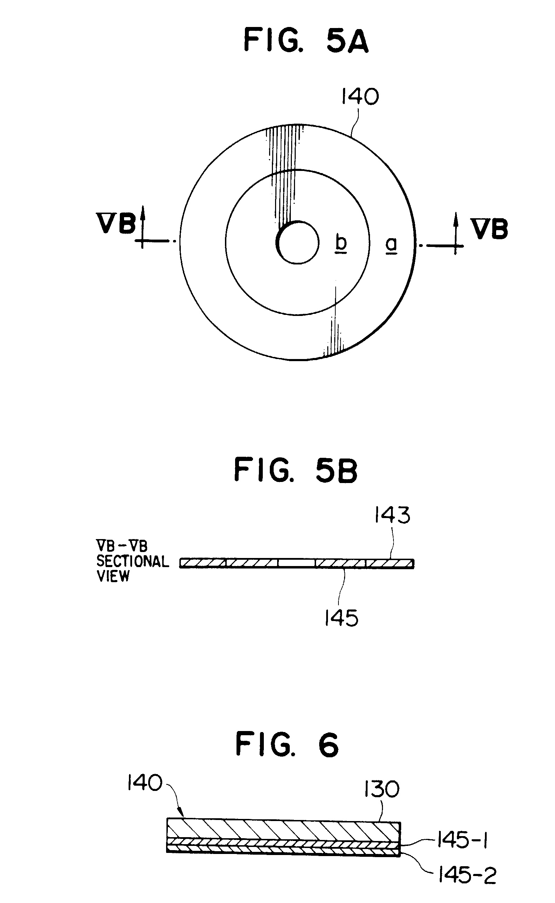

Fig. 5A and Fig. 5B show an embodiment of an optical disk in the optical disk-in-card 100. The optical disk 140 is formed of a substrate 143 and a recording medium 145. In these figures, a indicates a recording area and b indicates a non-recording area.

Here, the memory capacity for an optical disk-in-card is estimated. In the field of an IC card and a memory card, the outside dimension of a card has been already standardized, and the overall size is approximately 54 mm x 86 mm.

In the optical disk-in-card 100 of the present invention, it is preferable that the size of the protective case is also substantially in accordance with the size of the card in order to be used as a portable memory.

Thereupon, the memory capacity is estimated here assuming that a protective case having the overall size of 54 mm x 86 mm is used. Since the breadth is 54 mm, it is preferable that the outside dimension of the optical disk is 50 mm and less when 1 mm is assigned to edges, respectively. Further, since it is preferable that the recording area a in the optical disk is located about 1 mm inside the overall size of the disk, the outside diameter of the recording area a is preferably at approximately 48 mm.

On the other hand, the inside diameter of the recording area a is determined depending on the sizes of hub fitting for disk rotation and the disk retainer portion. Since about 15 to 28 mm is sufficient for the disk retainer portion, it may be concluded that 15 mm to 48 mm may be used as the recording area. When the outside dimension of the recording area is given, the memory capacity reaches the maximum when he inside diameter is selected at half of the outside dimension.

Thereupon the memory capacity when 24 mm to 48 mm is used as the recording area is estimated here. When an ordinary optical disk system is used, 1.6 µm is adopted as the spacing between tracks. Therefore, 7,500 tracks are obtained when the number of tracks are estimated with the above. Besides, since the bit density is at approximately 1.4 µm/bit, the number of bits per track is obtained at approximately 53.8 Kbits per track.

Accordingly, a recording capacity of approximately 50 MB (mega bytes) is obtainable at the time of unformat for the whole recording area.

Fig. 6 shows an embodiment of an magneto-optical disk in the magneto-optical disk-in-card 100. The magneto-optical disk 140 is composed of the recording medium 145 consisting of the substrate 130, the auxiliary recording layer and the recording layer. Fig. 6 is a partial sectional view showing another embodiment of the magneto-optical disk 140 shown in Fig. 5A. When light is incident from the substrate 130 side as shown in Fig. 2D, the substrate 130 needs to be transparent with respect to the wavelength of light employed. Among recording media, 145-1 becomes the write layer and 145-2 becomes the auxiliary recording layer. Further, 145-1 becomes the auxiliary recording layer and 145-2 becomes the recording layer among recording medium when light is incident from the side of the recording medium 145 as shown in Fig. 3. In the case of the latter, the substrate 130 may be either transparent or opaque.

Here, the capacity, etc. of the memory for the magneto-optical disk-in-card is substantially similar to that of the memory for the optical disk-in-card.

That is, it becomes possible to make an optical or magneto-optical disk-in-card thinner, and in its turn to make an information processor such as a lap top computer thinner.

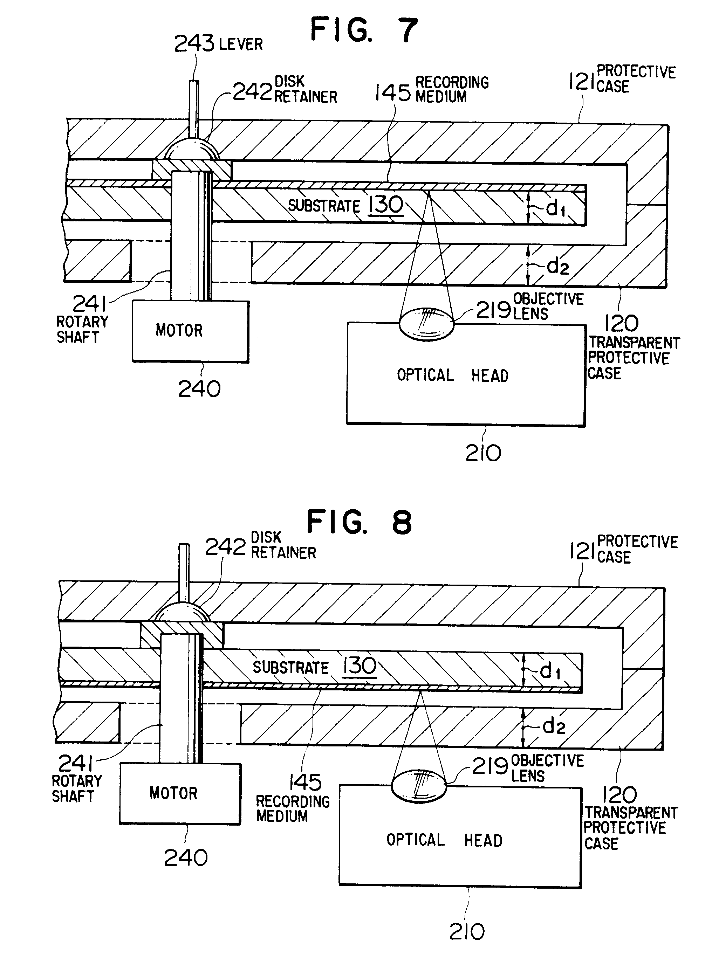

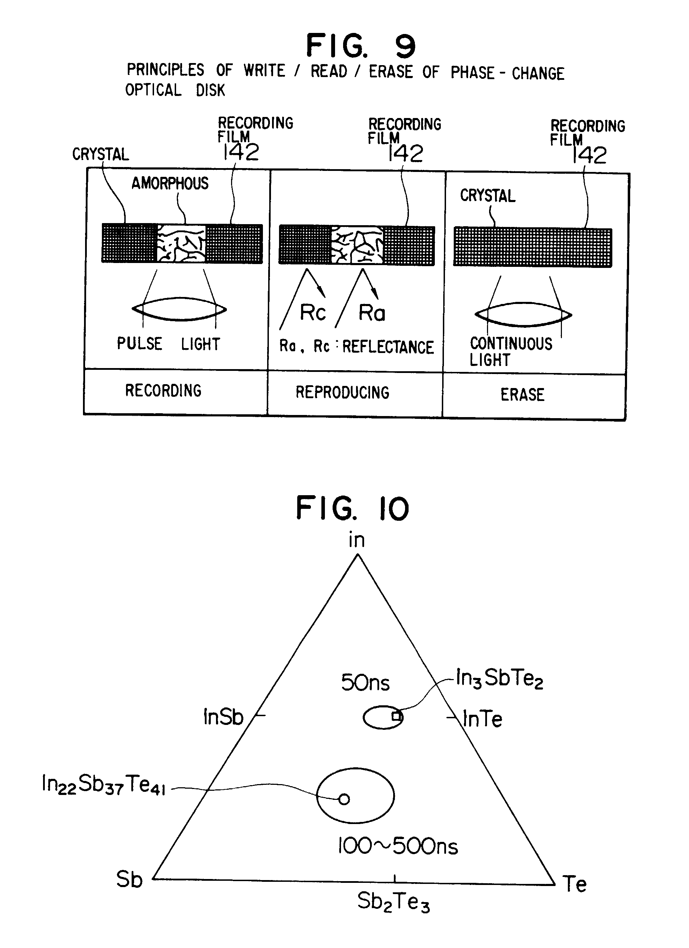

Fig. 7 and Fig. 8 are for explaining the concept of the present invention using an optical disk-in-card, and correspond to Fig. 2D and Fig. 3. With this, it becomes possible to make the optical disk thinner, and in its turn to make an information processor such as a lap top computer thinner.

As shown in Fig. 7, the present invention is composed of the substrate 130 supporting the recording medium 145, a protective case 120, 121 for protecting them, the motor 240 for rotating a disk and the optical head 210. The optical head may be realized essentially with an optical system as described in Nikkei Electronics, Nov. 21, 1983, pp. 189 - 213.

Write/read/erase of the optical disk are implemented with such a composition as follows. That is, new information is recorded on old information by modulating the power of a semiconductor laser in the optical head 210 between an erasing power and a writing power at the time of write/erase.

Further, the reflectance of the optical disk is read by contracting the semiconductor laser power to a comparatively small power and radiating it continuously at the time of reading. Here, a feature of the present invention exists in that a laser beam is radiated to the recording medium 145 through the transparent protective case 120.

That is, according to the present invention, there is such an effect that dust in air will never stick to the substrate 130 and the recording medium 145, and the substrate having a thickness of 1.2 mm which has been heretofore deemed indispensable may be made thinner by making the total of the plate thickness d₂ of the transparent protective case 120 and the plate thickness d₁ of the substrate 130 approximately 1.2 mm.

Similarly, when the thickness d₂ of the transparent protective plate of the present invention is made to be approximately 1.2 mm as shown in Fig. 8, it is not necessary to have light incident from the substrate 130 side, then a material having no light permeability can be used for the substrate 130. Further, the optical disk is fixed to the rotary shaft 241 and rotated, but is retained by the disk retainer 242 for stable rotation. Furthermore, since the protective case 121 is not a light incident portion, it may be either transparent or opaque.

Next, a recording medium best suited to realize the present invention will be explained. As the recording medium, a read-only medium such as a compact disk, a write once optical recording medium utilizing hole boring and phase-change, and a reversible optical read medium utilizing magneto-optical effect and phase-change may be used. That is, any medium which is able to read or write/erase by means of a laser beam may be used as a medium in the present invention.

Here, an example of write/erase/read utilizing a reversible phase-change optical disk will be explained. Fig. 9 shows principles of write/erase/read of a phase-change optical disk. As shown in the figure, writing is realized by irradiating a recording medium with a laser beam of comparatively high power and quenching a recording film 142 after melting, thereby to bring the recording film 142 under amorphous state. On the other hand, erasing is realized by irradiating the recording film 142 with a laser beam of comparatively low power and bringing the recording film 142 in amorphous state under a crystallized state. Further, reading is performed in such a manner that the recording medium is irradiated with continuous light of further lower power, thereby to read information by the difference between reflection factors under amorphous and crystallized states.

Any phase-change medium such as an In-Sb-Te recording film described in Proc. Soc. Photo-Opt. Inst. Eng. (SPIE), Vol. 1078, pp. 11 - 26, (1989) or a recording film capable of overwrite described in Proc. Soc. Photo-Opt. Inst. Eng. (SPIE), Vol. 1078, pp. 27 - 34, (1989) may be used as the recording film 142.

Fig. 10 shows the crystallization time of an In-Sb-Te material, but this recording film 142 has different crystallization times depending on the composition of the material and has a crystallization time ranging from 50 ns to 500 ns. Although there is a variation to some extent in selecting which crystallization time to be adopted depending on a linear velocity v(m/s) of the optical disk and a film structure of the optical disk medium, it is preferable to adopt a recording film having a crystallization time in the range of approximately from 500/v ns to 1,500/v ns.

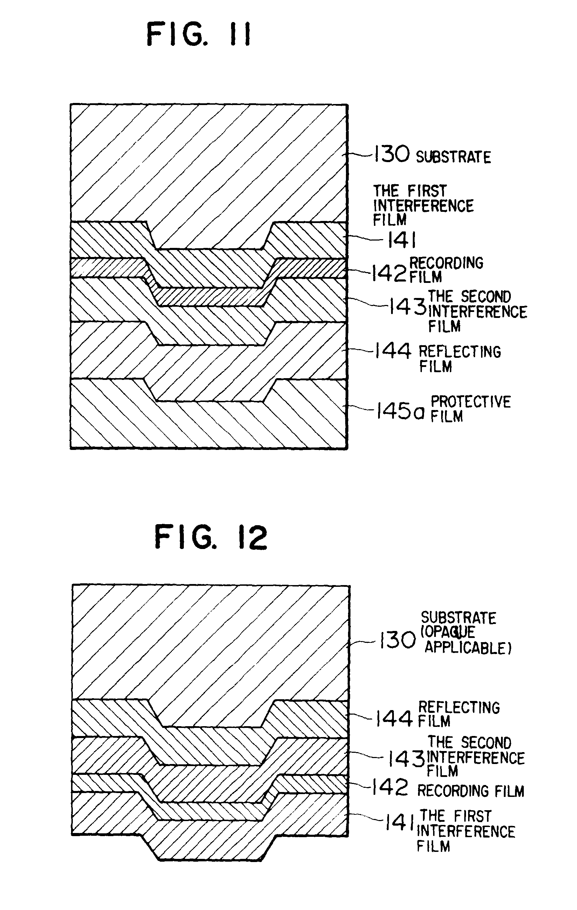

Further, Fig. 11 shows a film structure best suited to be used for the optical disk medium shown in Fig. 7. The optical disk medium is composed of a light permeable substrate 130, a first light interference film 141 having a high refractive index characteristic, a recording film 142, a second light interference film 143 having a high refractive index characteristic, a reflecting film 144 and a protective film 145a. In such an optical disk medium, light is incident from the substrate side.

On the other hand, Fig. 12 shows a film structure best suited to be used as the optical disk medium shown in Fig. 8. In this case, a feature exists in that the order from the first light interference film 141 to the reflecting film 144 is reversed because the laser beam is incident from the protective film. Here, the interference film fulfils the functions of improvement of contrast by light interference and a control film of heat conduction characteristic.

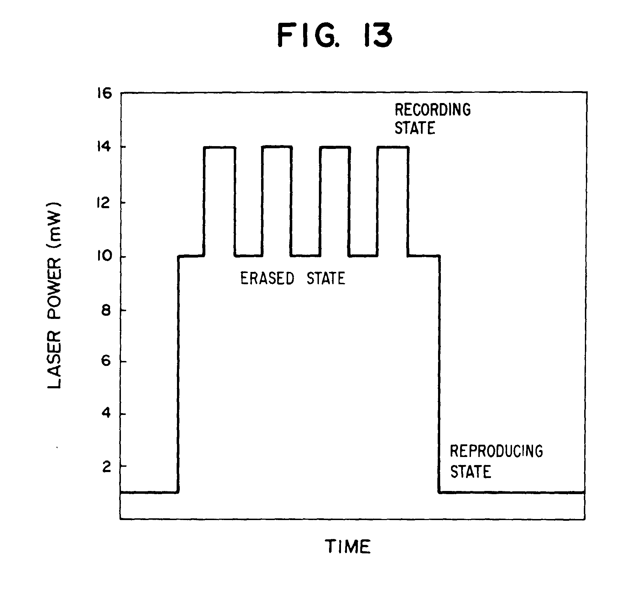

Fig. 13 shows a modulation method of the laser power at the time of overwriting. That is, the laser power is modulated between the power level for erasing and the power level for recording at the time of overwriting. At this time, the laser power for erasing is selected from the power which is able to crystallize the recording film when this power is continued to be radiated, and the power for recording is selected from the power which is able to bring the recording film under amorphous state.

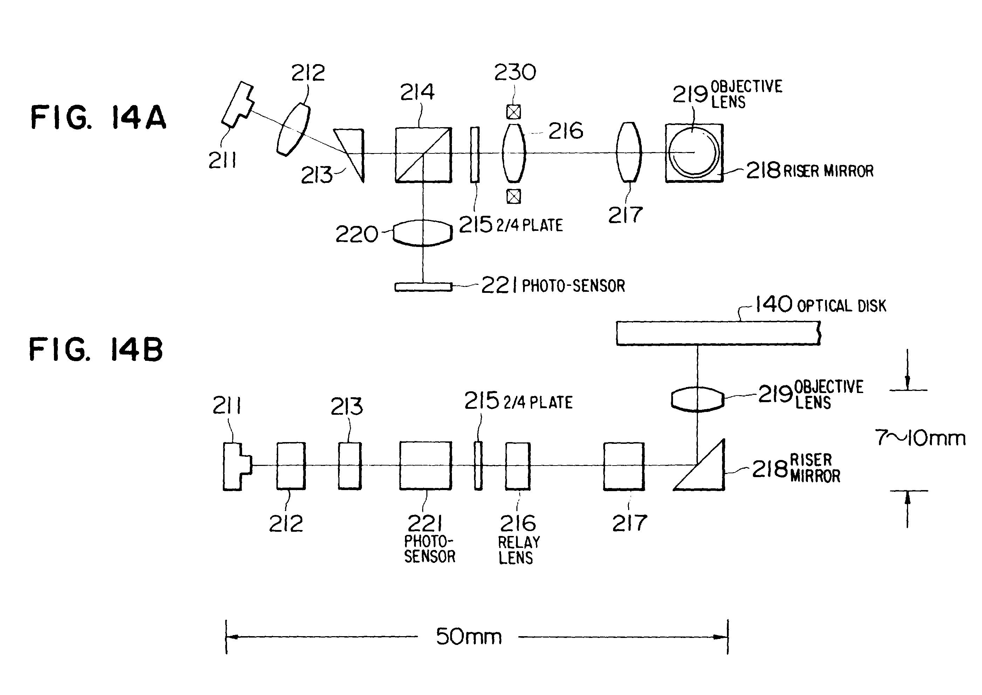

Fig. 14A and Fig. 14B show an example of the optical head 210 best suited to execute the present invention. In a conventional optical head, an actuator for driving an objective lens was provided for focal point control, but it was difficult to make the optical head thinner because of this actuator. In the optical head 210 of the present invention, the actuator for the objective lens 219 is deleted, and a relay lens 216 is provided instead and moved in a parallel direction with the disk, thereby to realize focal point control. Further, aberration on a disk is compensated in an ordinary objective lens by utilizing a plurality of lenses, but a part thereof is split and moved to the whole surface of a riser mirror 218 so as to make the optical head thinner.

The optical head 210 shown in Fig. 14A will be described. Luminous flux emitted from a semiconductor laser 211 passes through a collimator lens 212 and a shaping prism 213, and the luminous flux is reflected by a polarizing prism 214. The reflected luminous flux passes through a condenser lens 220 for detection, and is detected by an optical sensor 221. The luminous flux which has passed through the polarizing prism 214 passes through a λ/4 plate 215 and is converged appropriately by a relay lens 216 having a focus actuator 230, and then passes through an objective lens 217 and is reflected by a riser mirror 218, and is radiated onto the optical disk thereafter through an objective lens 219. The optical head 210 shown in Fig. 14B includes the optical sensor 221 provided with light permeability in place of the polarizing prism 214 and a relay lens 216 provided with no focus actuator 230.

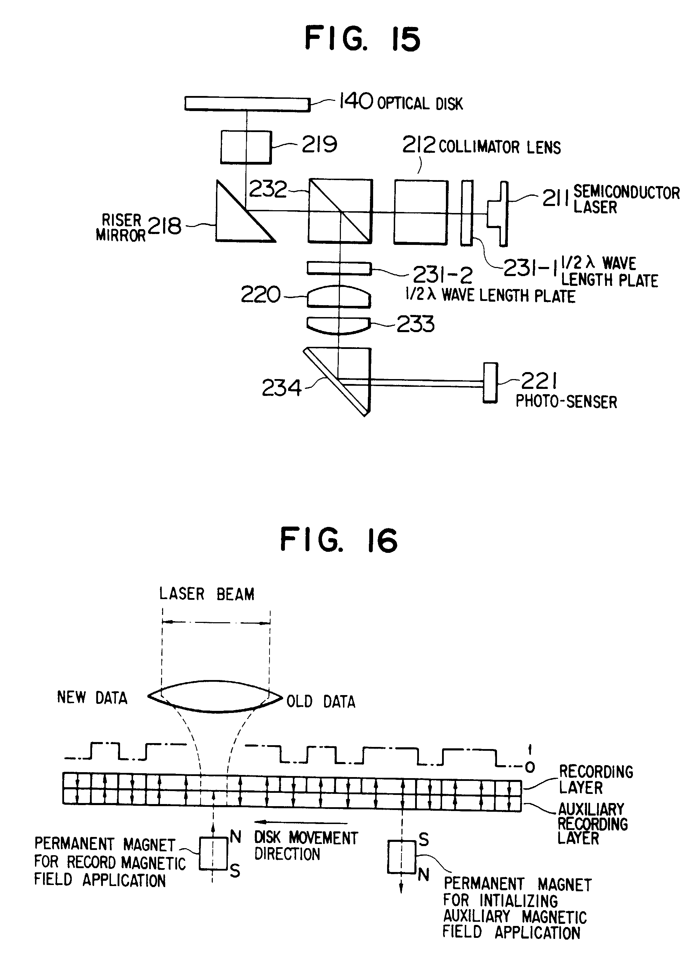

In Fig. 2A, Fig. 2B, Fig. 2C, Fig. 2D and Fig. 3, the optical head 210 may be realized with the optical system shown in Fig. 15. A divergent luminous flux emitted from a semiconductor laser 211 passes through a beam splitter (hereafter abbreviated as BS) 232 through a λ/2 plate 231-1 and a collimator lens 212 and becomes parallel luminous fluxes. The parallel luminous fluxes are reflected further by the riser mirror 218, and converted thereafter into parallel fluxes again by the objective lens 219 and radiated onto the optical disk 140. On the other hand, the luminous flux passes through a λ/2 plate 231-2 after reflected by the BS 232, and is incident to a detection lens 220 consisting of a combination of a convex lens and a concave lens so as to become a convergent luminous flux. The convergent luminous flux is incident to a cylindrical lens 233, thus producing astigmatism. The luminous flux which has passed the cylindrical lens 233 is incident to a micro BPS 234 which is an analyzer. This micro BPS 234 is composed of a parallelogram prism and transparent parallel flat plates putting a polarizing film which transmits P-polarized light (polarized light in a vibration direction parallel with the paper surface) and reflects S-polarized light (polarized light in a vibration direction perpendicular to the paper surface) therebetween. The convergent luminous flux is incident to the polarizing film from the upper side of the parallelogram prism. The P-polarized light which has transmitted through the polarizing film is totally reflected by the back plane of the parallel flat plates and passes through the polarizing film again, and then advances toward the left side of the parallelogram prism. On the other hand, the S-polarized light reflected by the polarizing film also advances in the same direction as the P-polarized light, and is incident to the optical sensor 221 at a certain interval. This interval is controlled by means of the parallel flat plates.

Fig. 16 shows the principle of overwriting a magneto-optical disk by laser power modulation. A write medium best suited for realizing the present invention will be explained with this principle. As shown in Fig. 6, the optical recording medium has a two-layer structure of the recording layer and the auxiliary recording layer, in which the recording layer on the side applied with a laser beam is composed of TbFe which has a large coercive force Hc and a low curie temperature and the auxiliary recording layer is composed of GdTbFe which has a small coercive force Hc and a high curie temperature. Besides, the permanent magnet for applying initializing auxiliary magnetic field is made to generate a magnetic field stronger than that of the permanent magnet for applying recording magnetic field. First, magnetization of the auxiliary recording layer having small Hc is oriented in a magnetizing direction in the permanent magnet for applying initializing auxiliary magnetic field. At this time, since magnetization of the recording layer has coercive force larger than that of the permanent magnet for applying initializing auxiliary magnetic field, the magnetizing direction is not reversed. When the recording medium reaches a position where the laser beam is applied under abovementioned state, magnetization of the auxiliary recording layer having a high curie temperature is preserved as is and only the recording layer reaches the curie temperature and higher when the laser power is weak. Thus, the magnetization of the recording layer is oriented in the magnetizing direction of the auxiliary recording layer in the cooling process. On the other hand, since the auxiliary recording layer also reaches the curie temperature when the laser power is strong, the magnetization thereof is oriented in the direction of the magnetic field of the permanent magnet for applying recording magnetic field along with the recording layer. That is, since the magnetizing direction is determined by the difference in the intensity of the laser power, viz., modulation of the laser power, a process of erasing old written contents becomes unnecessary, thus making overwriting possible. Due to such a principle, it is required that the permanent magnet for applying recording magnetic field is positioned where the laser beam is applied. However, the permanent magnet for applying initializing auxiliary magnetic field needs not be placed at positions shown in Fig. 2D and Fig. 3, but may be placed at any position in the case on the recording area of the magneto-optical disk which does not overlap with the permanent magnet for applying recording magnetic field.

The optical recording medium is not limited to a Tb₂₁Fe₇₉ recording layer and a Gd₂₄Tb₃Fe₇₃ auxiliary recording layer so far as a two-layer structure of a recording layer having a large coercive force Hc and a low curie temperature and an auxiliary recording layer having a small coercive force Hc and a high curie temperature is formed. Further, a composition of a GdTbFeCo recording layer, a GdFeCo intermediate layer and a TbFeCo auxiliary recording layer which is a two-layer lamination having a third magnetic layer intermediately as a means for reducing magnetic wall energy at the interface may be used as well.

Since the permanent magnet such as SmCo and NdFeB used as a second magnetic field application means for recording in the recording layer is not transparent with respect to the wavelength of incident light as seen from the principle of overwriting, it is required that the means for applying magnetic field for recording in the recording layer is self-contained in a case on the opposite side of the light incident portion and the disk. In Fig. 2D and Fig. 3, the first magnetic field application means for initializing the auxiliary recording layer is shown to be self-contained in the case on the opposite side of the light incident portion and the disk, but the first magnetic field application means for initializing the auxiliary recording layer may be self-contained in the case on the light incident side.

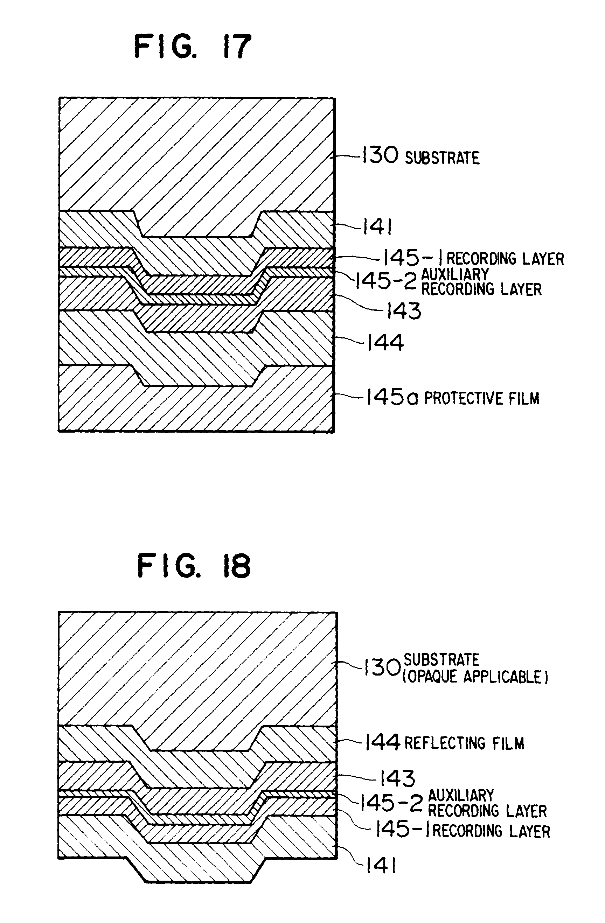

Fig. 17 shows a film structure best suited to be used as a magneto-optical disk medium shown in Fig. 2D. The magneto-optical disk medium is composed of a light permeable substrate 130, a first light interference film 141 having a high refractive index characteristic, recording layer 145-1, an auxiliary recording layer 145-2, a second light interference film 143 having a high refractive index characteristic, a reflecting film 144 and a protective film 145a. In such an optical disk medium, light is incident from the substrate side. Si₂N₄, AlN, Ta₂O₅, ZnS and the like can be used as a dielectric film having a high refractive index. An example of a manufacturing method and performance will be shown. First, a first light interference film Si₃N₄ having a thickness of 100 nm, then a recording film Tb₂₀Fe₈₀ having a thickness of 100 nm, an auxiliary recording film Gd₂₄Tb₅Fe₇₁ having a thickness of 50 nm, a second light interference film Si₃N₄ having a thickness of 100 nm and an Au reflecting film having a thickness of 100 nm have been formed by applying a sputtering method to a glass substrate having a thickness of 0.5 mm and a diameter of 48 mm on which a groove having a depth of 100 nm and a pitch of 1.6 µm is formed in a spiral form. Furthermore, ultraviolet hardening resin having a thickness of 100 µm has been formed as a protective film thereon. This magneto-optical disk was attached to the transparent case shown in Fig. 2D, that is, a polycarbonate substrate having a thickness of 0.6 mm obtained by cutting a SmCo magnet having Hc at 40,000 e as the first magnetic field application means for initializing the auxiliary recording layer and a SmCo magnet 5 mm wide and 25 mm long having Hc at 3,000 e as the second magnetic field application means for recording in the recording layer out of a bulk. The performance of such a magneto-optical disk-in-card has been evaluated. The disk-in-card was rotated at the rotation speed of 3,600 rpm and tested by the laser modulation method at the time of overwriting shown in Fig. 13. That is, when 6.6 mW was set on the write film surface as the bias power and 8.9 mW was set on the recording film surface as the recording power and overwrite test was executed while modulating the optical beam between 2 MHz and 3 MHz, C/N was obtained at 54 dB and the error generation factor was obtained at less than 10⁻⁵.

On the other hand, Fig. 18 shows a film structure best suited to be used as the magneto-optical disk medium shown in Fig. 3. In this case, a feature exists in that the order from the first light interference film 141 to the reflecting film 144 is reversed because the laser beam is incident from the protective film. Here, the interference film fulfils the functions of improvement of contrast by means of interference of light and the control film of heat conduction characteristic. Besides, in this case, since the light incident side is not on the substrate side, it is possible to form the same film composition as that shown in Fig. 18 on the opposite side of the substrate, thereby to use both sides of one sheet of substrate. An example of a manufacturing method and performance is shown. First, an Au reflecting film having a thickness of 100 nm, a second light interference film AlN having a thickness of 100 nm, an auxiliary recording layer Tb₂₄Fe₆₅Co₁₁ having a thickness of 100 nm, a recording film Gd₂₄Tb₃Fe₇₃ having a thickness of 50 nm and a first light interference film Si₃N₄ having a thickness of 100 nm have been formed by applying a sputtering method to a stainless steel substrate having 0.5 mm in thickness and 48 mm in diameter on which a groove having 100 nm in depth and 1.6 µm in pitch is formed in a spiral form. Furthermore, ultraviolet hardening resin having a thickness of 100 µm has been formed as a protective film thereon. This magneto-optical disk was attached to the transparent case shown in Fig. 3, that is, a polycarbonate substrate having a thickness of 0.6 mm obtained by cutting a SmCo magnet having Hc at 40,000 e as the first magnetic field application means for initializing the auxiliary recording layer and a SmCo magnet 5 mm wide and 25 mm long having Hc at 3,000 e as the second magnetic field application means for recording in the recording layer out of a bulk. The performance of such a magneto-optical disk-in-card has been evaluated. When the disk-in-card was rotated at the rotation speed of 3,600 rpm, 6.6 mW was set on the recording film surface as the bias power and 8.9 mW was set on the recording film surface as the write power and overwrite test was executed while modulating the optical beam between 2 MHz and 3 MHz, C/N was obtained at 54 dB and the error generation factor was obtained at less than 10⁻⁵.

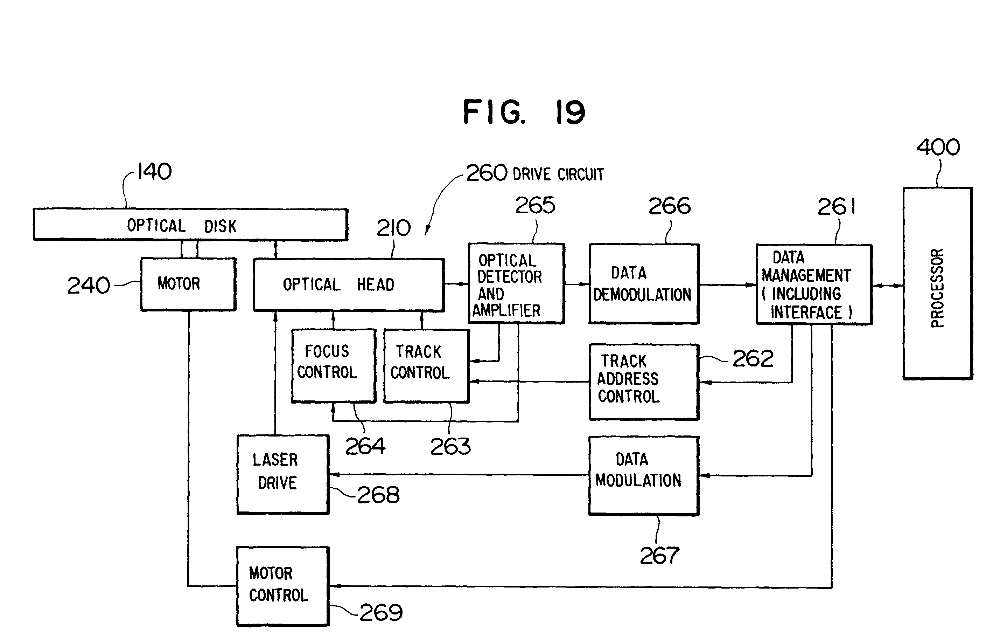

An optical disk drive circuit system 260 is explained in detail in Fig. 19. The optical disk drive circuit system 260 is composed of a data management portion 261, a track address control portion 262, a track control portion 263, a focus control portion 264, a photo detector and amplifier 265, a data demodulation portion 266, a data modulation portion 267, a laser drive 268 and a motor control portion 269. With such a composition, at the time of overwriting, a track address to be written is determined in the track address control portion 262, and the data modulation portion 267 converts the data given from a processor 400 into "0" and "1" pattern to be recorded on the optical disk by a modulation system. The modulation system includes 2 7 modulation and 4-15 modulation, which, however, are used properly depending on the system. In the laser drive 268, the laser power is modulated between the bias power and the writing power as shown in Fig. 13 in accordance with the "0" and "1" pattern determined by the data modulation portion 267. Further, at the time of reading data, a track address designated by the processor 400 is selected, the laser power is set at a constant value of approximately 1 to 2 mW, the reflectance of the optical disk or the karr rotation of the magneto-optical disk 140 is read by the photo detector and amplifier 265, and the data are demodulated by the data demodulation portion 266. Further, the result of the photo detector and amplifier 265 may be utilized as the signal of the track control portion 263 and the focus control portion 264, but the functions of these portions can be realized with the functions which have been heretofore employed in a compact disk and an optical disk device. Further, the motor control portion 269 controls the number of rotation of a motor 240 for rotating the optical disk 140. There are CAV (Constant Angular Velocity) type and CLV (Constant Linear Velocity) type for the control of the number of rotation.

In another embodiment of an optical or magneto-optical disk-in-card of the present invention, a means for rotating the disk is self-contained in the card. With this, it is possible to make the thickness of the whole information processor thinner by the portion of the motor.

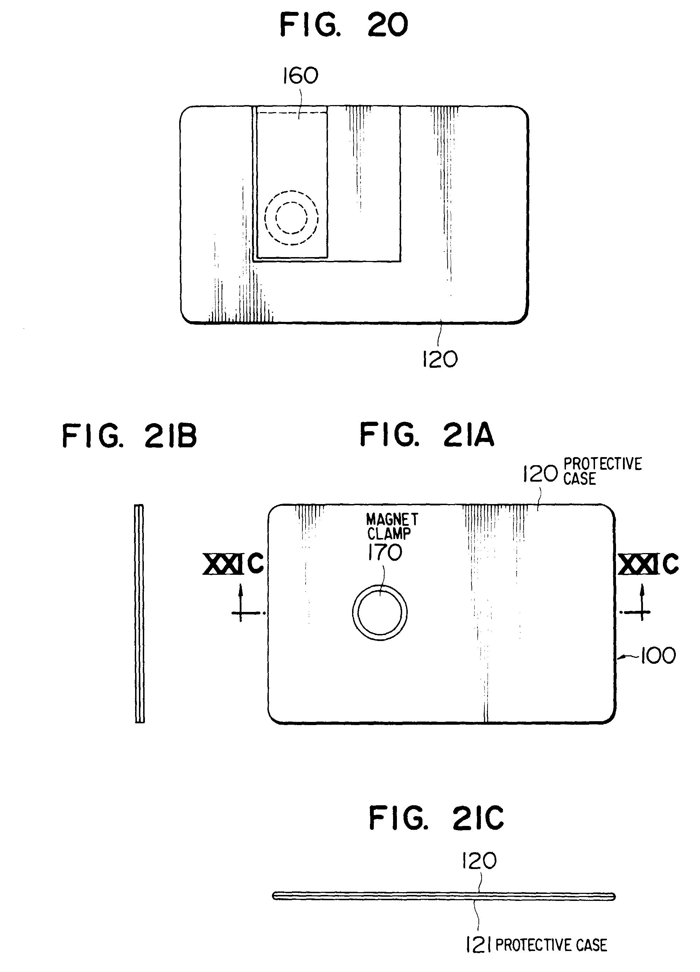

Fig. 20 shows another embodiment of the disk-in-card 100. The basic composition is the same as the composition shown in Fig. 4, and the light incident portion is covered with a transparent protective case, but the feature of the embodiment shown in Fig. 20 exists in that a protective cover 160 is provided. Since the disk-in-card 100 of the present invention is carried freely, the card case 120 is flawed sometimes. There is no problem even if other parts than the light incident portion are flawed, but the card case needs to be replaced sometimes if the light incident portion is flawed. It is an object of the present invention to reduce the frequency of replacement of the card case. That is, by providing the protective cover 160 on the card case 120, it is prevented that the light incident portion is flawed, and incidence of light is made free by opening the protective cover 160 when the optical disk-in-card is inserted into the optical disk drive 200.

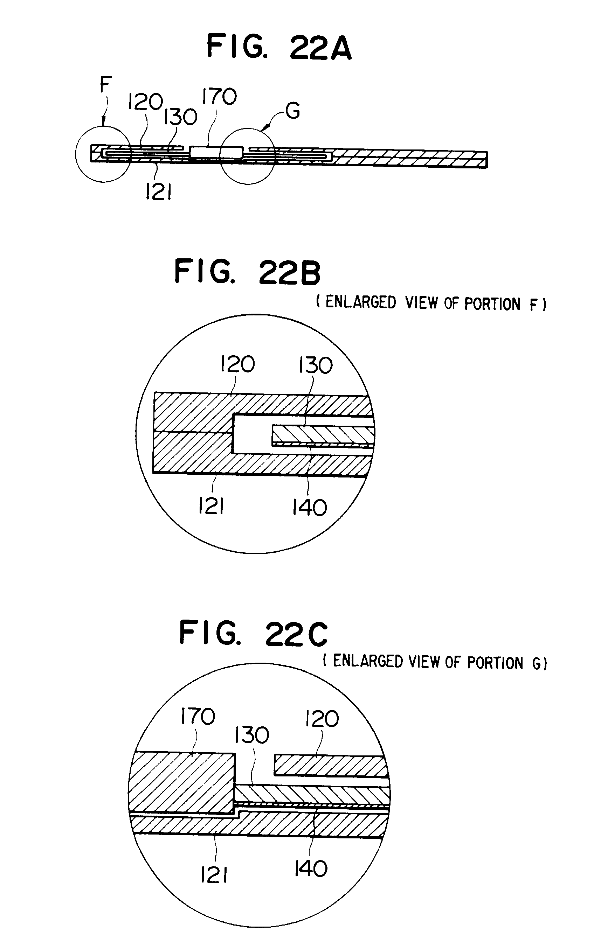

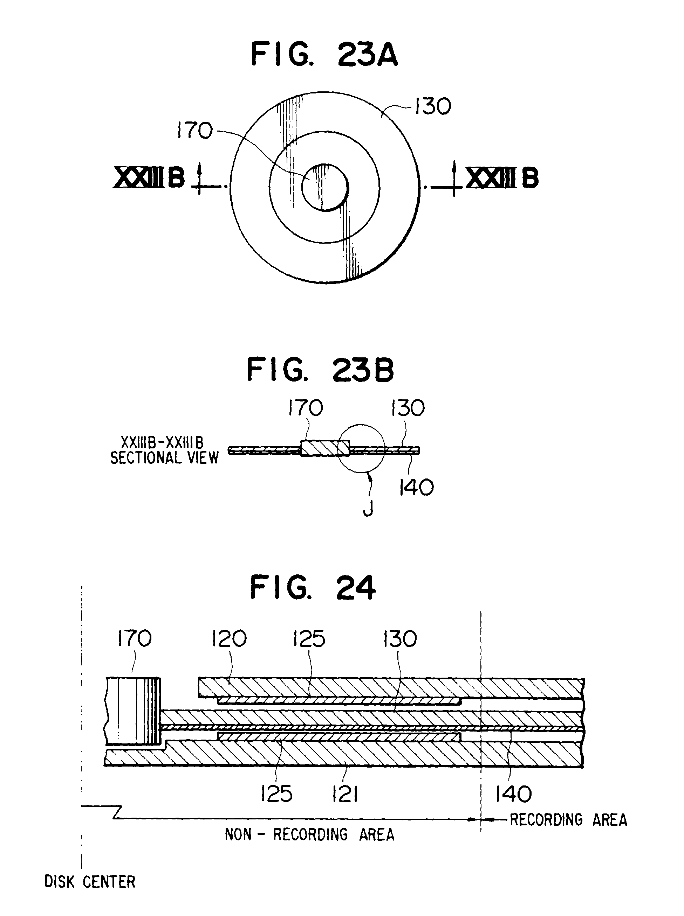

Fig. 21A, Fig. 21B and Fig. 21C show still another embodiment of the optical disk-in-card 100. Transparent protective plates 120 and 121 each have a film thickness of approximately 0.5 to 1.2 mm and the optical disk 140 (not shown) is inserted between these protective plates 120 and 121. Further, 170 indicates a magnet clamp for fixing the optical disk 140 to the rotary shaft for rotating the optical disk. Fig. 22A is a sectional view taken along arrow marks XXIC-XXIC shown in Fig. 21A, and Fig. 22B and Fig. 22C are enlarged views shown with arrow marks F and G shown in Fig. 22A. The optical disk 140 is fixed with the magnet clamp 170 and is apart from the protective plates 120 and 121. Under the state that the optical disk 140 is rotating, the optical disk 140 and the substrate 130 are under floating states from the protective plates 120 and 121. Fig. 23A and Fig. 23B show an example of the optical disk in this disk-in-card 100. The central part of the disk is hollow in the example shown in Fig. 5B, whereas the example shown in Fig. 23B has a feature that the disk is fixed with the magnet clamp 170 at the central part thereof.

Fig. 24 is an enlarged view shown with an arrow mark J in Fig. 23B and shows a preventive method against mixing of dust and dirt into the recording area. According to the present invention, the light incident portion is covered with a transparent protective cover. Therefore, dust and dirt will never get directly into the recording area, but the central part of the disk is open for the purpose of rotation, thus it is possible that dust and dirt mix in through this central part. Accordingly, in the present invention, a dust protective mat 125 is laid in a non-recording area so as to prevent mixing of dust and dirt from the central part of the disk. An example in which a magnet clamp is utilized was explained with reference to Fig. 24, however, it is a matter of course that this dust protective mat is applicable to the example shown in Fig. 2.

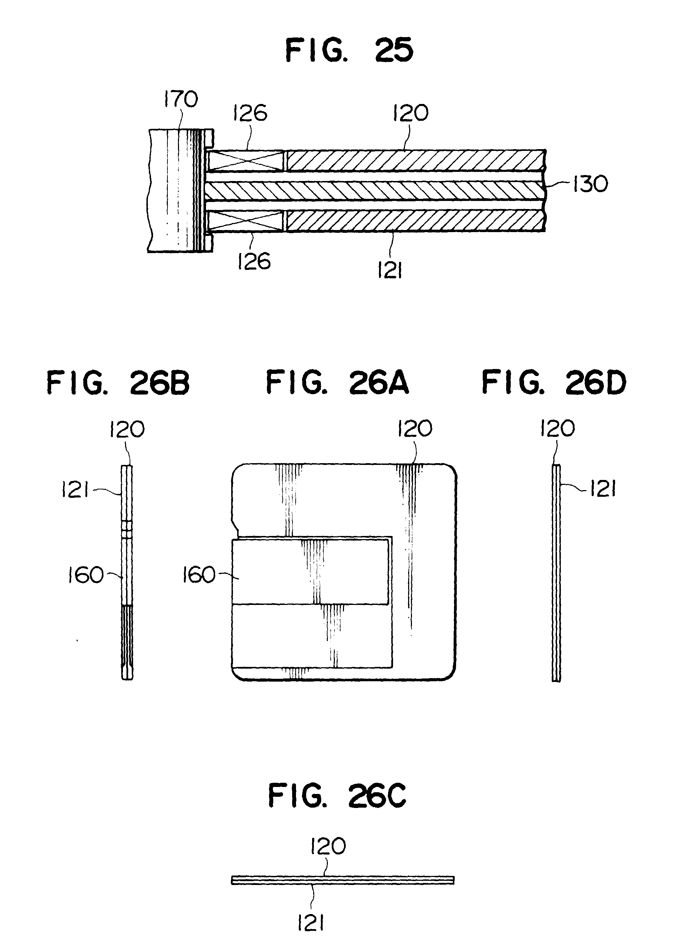

Fig. 25 shows another example of a counter-measure against dust corresponding to Fig. 24. In the example shown in Fig. 24, there was a fear that dust and dirt mix in because the central part of the disk was open. Whereas, the present embodiment has a feature that a bearing 126 is provided at the central part of the disk so as to delete the opened part.

Fig. 26A, Fig. 26B, Fig. 26C and Fig. 26D show another embodiment related to the card configuration. In above-described embodiment, a case that the card configuration has an equivalent configuration to a credit card has been described, but any configuration may be applied so far as the size thereof may contain the optical disk. Fig. 26A shows an embodiment of a substantially square card having a protective cover 160. Besides, the size of the optical disk has been shown at approximately 50 mm in the present invention, but the size may be altered at need. That is, the present invention is applicable to any size such as 12 inches, 8 inches, 5.25 inches, 5 inches and 3.5 inches which have been heretofore developed.

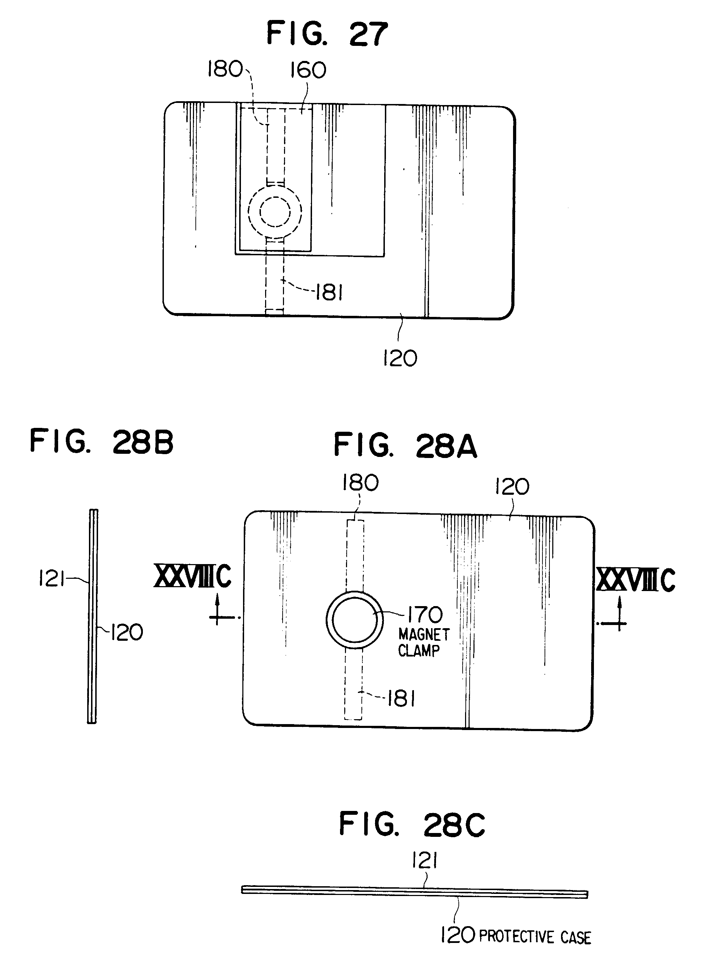

Fig. 27 shows another embodiment of the magneto-optical disk-in-card 100 for realizing the present invention. The basic composition is the same as the composition shown in Fig. 2A and the light incident portion is covered with a transparent protective case, but the feature of the embodiment shown in Fig. 27 exists in that a protective cover 160 is further provided. Besides, the permanent magnet for initializing the auxiliary recording layer of the recording medium and the permanent magnet for recording in the recording layer are in the protective case. Since the magneto-optical disk-in-card 100 of the present invention is carried freely, the card 120 is flawed sometimes. There is no problem even if other parts that the light incident portion are flawed, but the card case needs to be replaced sometimes if the light incident portion is flawed. It is an object of the present invention to reduce the frequency of replacement of the card case. That is, by providing the protective cover 160 on the card case 120, it is prevented that the light incident portion is flawed, and incidence of light is made free by opening the protective cover 160 when the magneto-optical disk memory card is inserted into the optical disk drive 200.

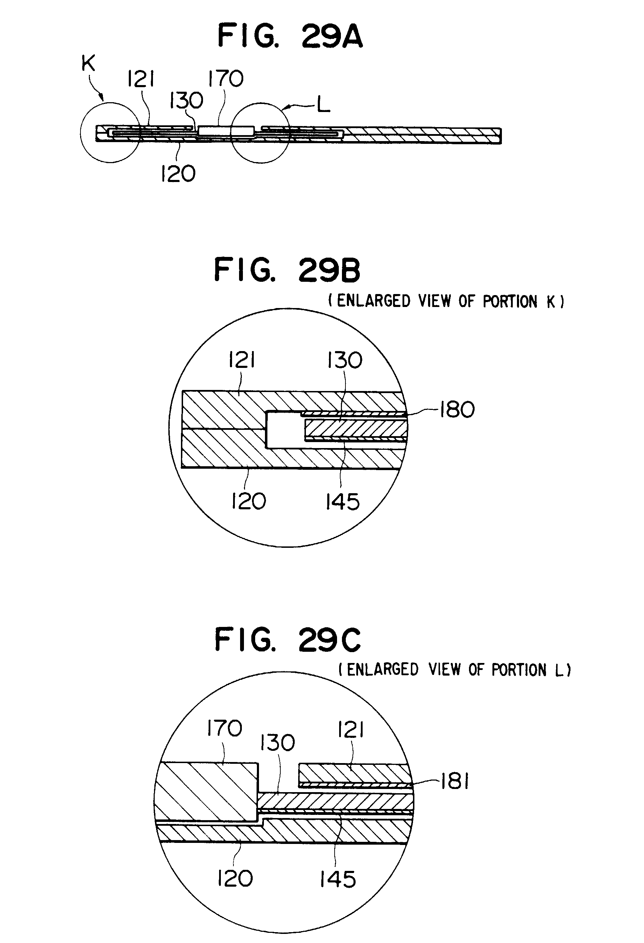

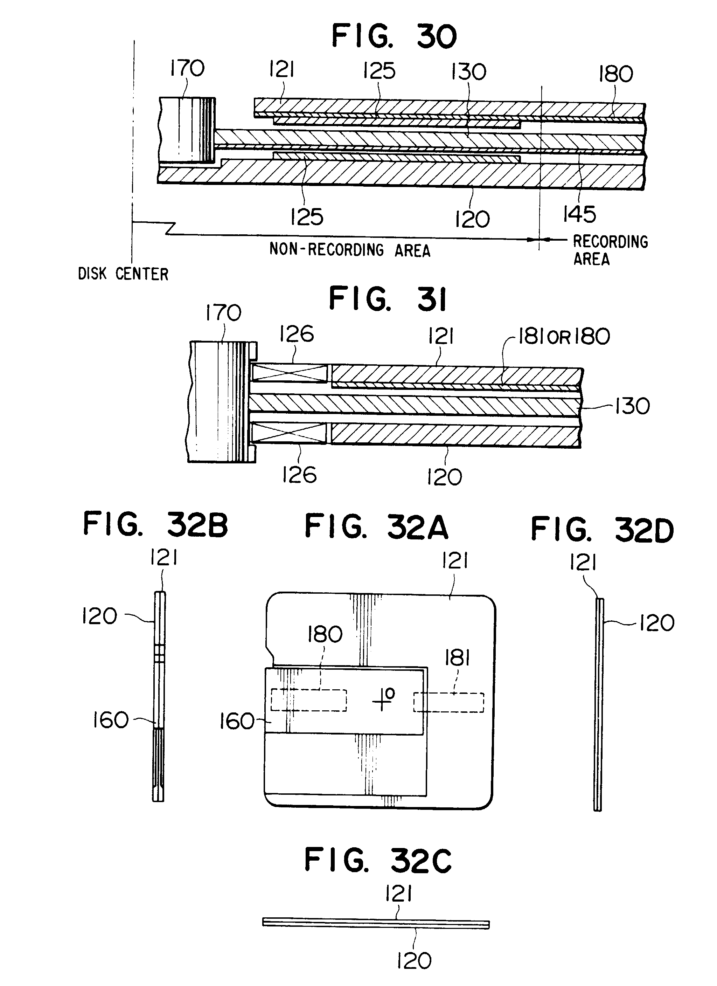

Fig. 28A, Fig. 28B and Fig. 28C show another embodiment of the magneto-optical disk-in-card 100. Fig. 28A shows the external appearance of a magneto-optical disk of a card size attached with the transparent protective case 120 and the protective case 121. The permanent magnet 181 for initializing magnetic field and a permanent magnet 180 for recording magnetic field are fitted to the protective case 121. The transparent protective cases 120 and 121 have a film thickness of approximately 0.5 to 1.2 mm, respectively, and the magneto-optical disk 140 (not shown) is inserted between these protective cases 120 and 121. Besides, 170 indicates the magnet clamp which fixed the magneto-optical disk 140 to a rotary shaft for rotation. Fig. 29A shows a sectional structure of the magneto-optical disk in Fig. 28A shown along arrow marks XXVIIIC-XXVIIIC. The magneto optical disk 140 is fixed by the magnet clamp 170 and is apart from the protective case 120, 121. Further, Fig. 29B and Fig. 29C are enlarged views showing the parts shown with arrow marks K and L in Fig. 29A in more details. Under the state that the magneto-optical disk 140 is rotating, the magneto-optical disk 140 and the substrate 130 are under floating states from the protective case 120, 121. Fig. 30 shows another embodiment corresponding to Fig. 29C, which shows an example of a magneto-optical disk in the magneto-optical disk-in-card 100. The central part of the disk is hollow in the example shown in Fig. 5B, whereas the example shown in Fig. 30 has a feature that the disk is fixed with the magnet clamp 170 at the central part thereof.

Fig. 30 shows a preventive method against mixing of dust and dirt into the recording. According to the present invention, the light incident portion is covered with a transparent protective cover. Therefore, dust and dirt will never get directly into the recording area, but the central part of the disk is open for the purpose of rotation, thus it is possible that dust and dirt mix in through this central part. Accordingly, in the present invention, a dust protective mat 125 is laid in a non-recording area so as to prevent mixing of dust and dirt from the central part of the disk. An example in which a magnet clamp is utilized was explained with reference to Fig. 30, however, it is a matter of course that this dust protective mat is applicable to the examples shown in Fig. 2D and Fig. 3.

Fig. 31 shows another example of a counter-measure against dust. In the example shown in Fig. 30, there was a fear that dust and dirt mix in because the central part of the disk was open. Whereas, the present embodiment has a feature that a bearing 126 is provided at the central part of the disk so as to delete the opened part.

Fig. 32A, Fig. 32B, Fig. 32C and Fig. 32D show another embodiment related to the card configuration. In above-described embodiment, a case that the card configuration has an equivalent configuration to a credit card has been described, but any configuration may be applied so far as the size thereof may contain the magneto-optical disk. Fig. 32A shows an embodiment of a substantially square card. Besides, the size of the optical disk has been shown at approximately 50 mm in the present invention, but the size may be altered. That is, the present invention is applicable to any size such as 12 inches, 8 inches, 5.25 inches, 5 inches and 3.5 inches which have been heretofore developed.

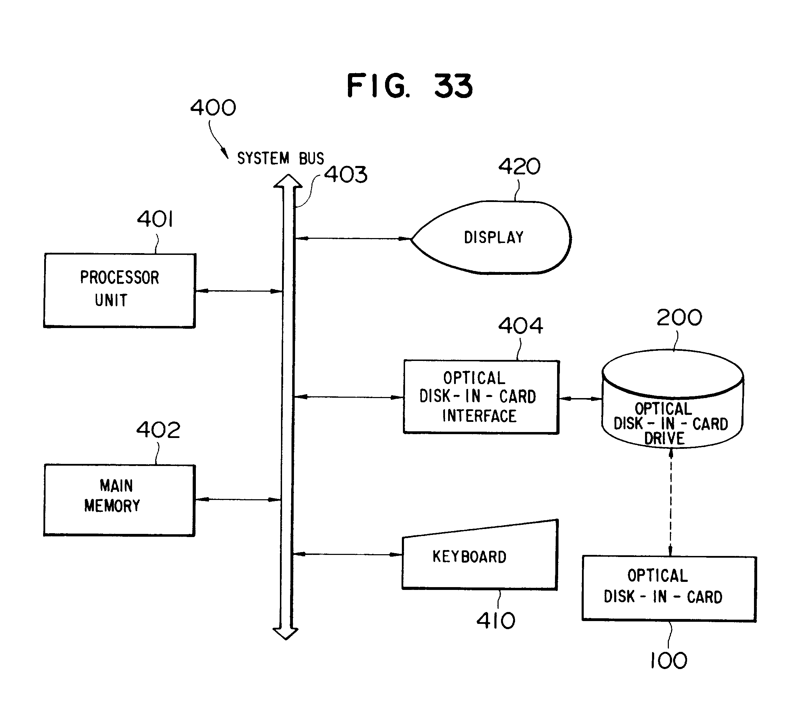

Fig. 33 shows an embodiment in case the present invention is applied to a lap top computer. This embodiment is composed of a lap top computer 400 including a processor unit 401 and a semiconductor main memory 402, and a keyboard 410 and a display 420 are connected thereto through a system bus 403, but the feature of the present invention exists in that an optical or magneto-optical disk-in-card drive 200 is connected through an optical or magneto-optical disk-in-card interface 404. The optical or magneto-optical disk-in-card 100 of the present invention has a capacity wave than 10 MB in spite of the small size having the overall size of approximately 50 mm. With this, large-scale arithmetic processing of a minicomputer is made possible though it is a lap top computer. Further, it is detachable from the optical or magneto-optical disk-in-card drive 200, thus providing a system convenient for transportation.

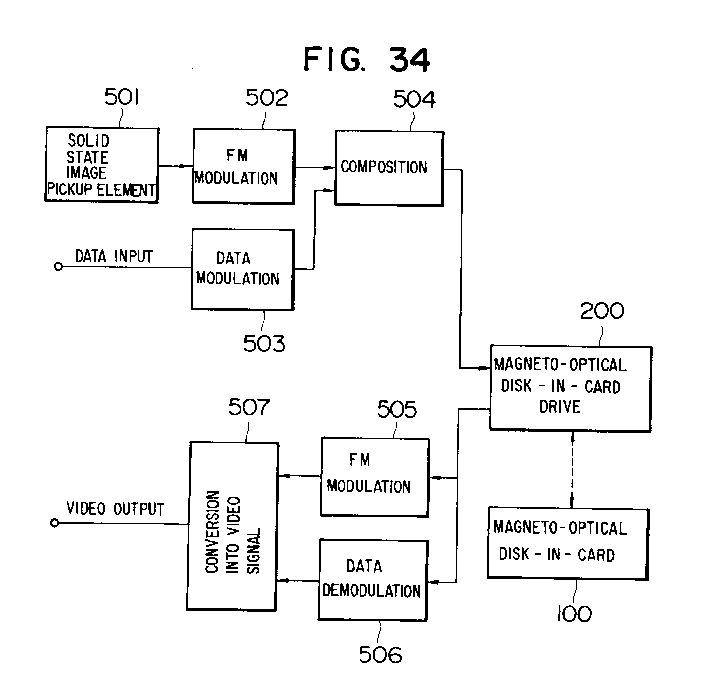

Fig. 34 shows an embodiment when the present invention is applied to a camera. Signal processing of an electronic camera utilizing a floppy disk can be utilized for basic signal processing thereof. Signal processing of an electronic camera consists of an FM modulation element of a picture image, a modulation element of data such as data, a recording portion into a floppy disk and a video signal read portion as described in the Nikkei Electronics, Dec. 12, 1988, pp. 195 - 201. The feature of the present invention exists in that the optical or magneto-optical disk-in-card 100 is utilized as the recording medium of a signal. The optical or magneto-optical disk-in-card 100 of the present invention not only has a large capacity, but also is easy for handling and highly reliable because the optical disk is self-contained in a transparent protective case.

Concrete operation will be explained with reference to Fig. 34. In the figure, an electric signal converted photoelectrically by a solid state image pickup element 501 of a CCD or a MOS is FM-modulated. On the other hand, the data are converted by a differential phase shift keying (DPSK) system and the like, synthesized with FM modulation (block 504) and recorded in the optical or magneto-optical disk-in-card 100 through the optical or magneto-optical disk-in-card drive 200. On the other hand, at the time of reading, the picture image is demodulated by an FM demodulator 505 and the data are demodulated by a data demodulator 506, and both are converted into video signals such as NTSC by means of a converter 507 into video signals.

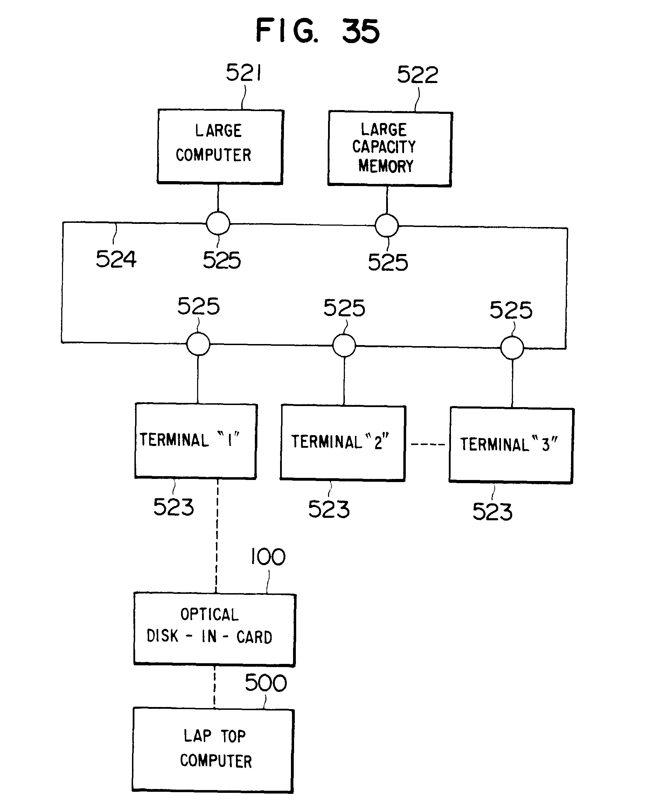

Fig. 35 shows an example in which the optical or magneto-optical disk-in-card 100 is utilized as an interface between a lap top computer 500 and a terminal 523 of a large computer 521. In the figure, the large computer 521 has a memory 522 of a large capacity such as an ordinary magnetic disk, and is connected with a plurality of terminals 523 through a network 524 and stations 525 for utilization. However, there has been a problem that such a system cannot be utilized where there is no terminal. According to the present invention which has been made to solve such a problem, an optical or magneto-optical disk-in-card 100 of the present invention is used in a lap top computer 500 and the optical or magneto-optical disk-in-card 100 of the present invention is also used as a memory of the terminal 523 of the large computer. By using the optical or magneto-optical disk-in-card 100 in common as the memory of the lap top computer 500 and the terminal 523 of the large computer in a manner as described above, it is possible to proceed with a work of creating a program and debugging at home or in an electric car where the terminal is not available.

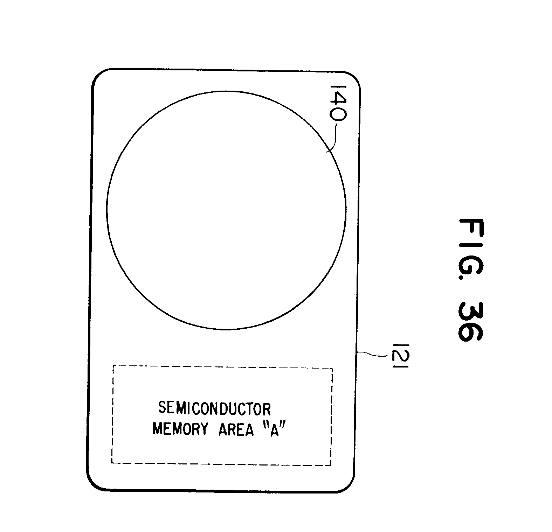

Fig. 36 shows an application example of the optical or magneto-optical disk-in-card 100 when security is demanded of the memory. Although the optical or magneto-optical disk 140 has a feature of a large capacity, it is possible to check what type of pattern has been written with a microscope having a high enlargement ratio. It is not only possible to ensure security by utilizing a random number code and the like, but also to ensure higher security by providing a semiconductor memory on the card. In this case, it can be achieved by providing a semiconductor memory area "A" as shown in Fig. 36. If high security can be achieved as described above, this optical or magneto-optical disk memory card 100 can realize cash cards and information requiring secrecy such as a portable personal medical medium data base. In this case, it can be materialized with the hardware composition shown in Fig. 1.

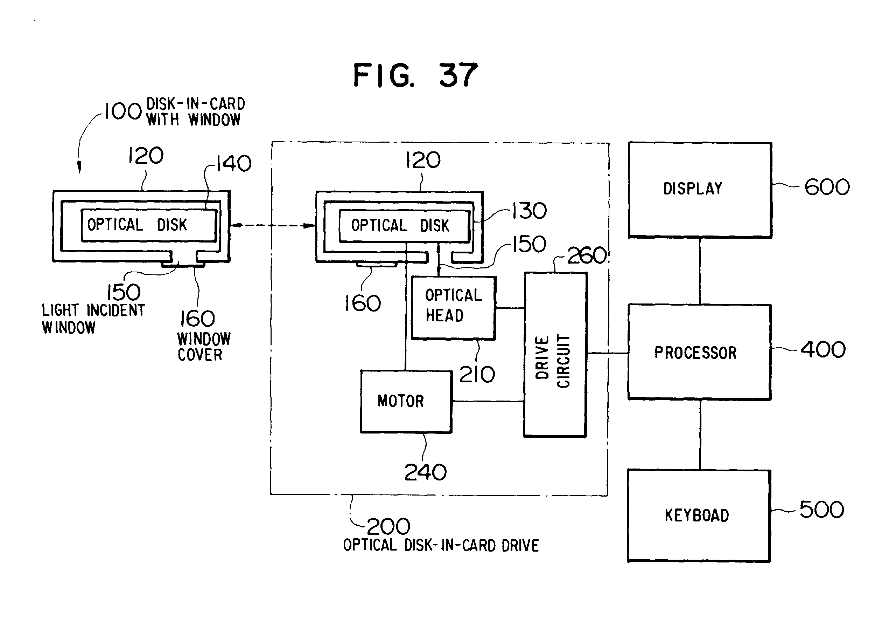

An embodiment of the present invention will be explained hereafter with reference to Fig. 37. Fig. 37 shows a conceptual diagram of an optical or magneto-optical disk-in-card memory of the present invention. The optical or magneto-optical disk memory of the present invention is composed of an optical or magneto-optical disk 100 in 50 mmφ incorporated in a protective case of a card size, a disk drive 200 for the optical or magneto-optical disk-in-card, a processor 400, and input means 500 and an output means 600. The optical or magneto-optical disk-in-card 100 is composed of an optical disk 140, a light incident window 150, a card case 120 and a window cover 160, and is detachable from a disk drive 200. Further, the disk drive 200 is composed of a write/read/erase optical head 210, a motor 240 for rotating the optical disk 140 and a drive circuit 260 for controlling the optical head 210 and the motor 240, and the light incident cover 150 is opened automatically so that light may be incident when the optical or magneto-optical disk-in-card 100 is set. The drive circuit 260 controls the number of rotation of the motor 240 and also fulfils the functions of modulation and demodulation for reading of write/erase data by the command from the processor 400. Further, the processor 400 executes arithmetic processing or write/read to the optical disk in accordance with the command from the input means 500, and also outputs the contents of the memory of the optical disk 140 or operation results through the output means 600 as occasion demands.

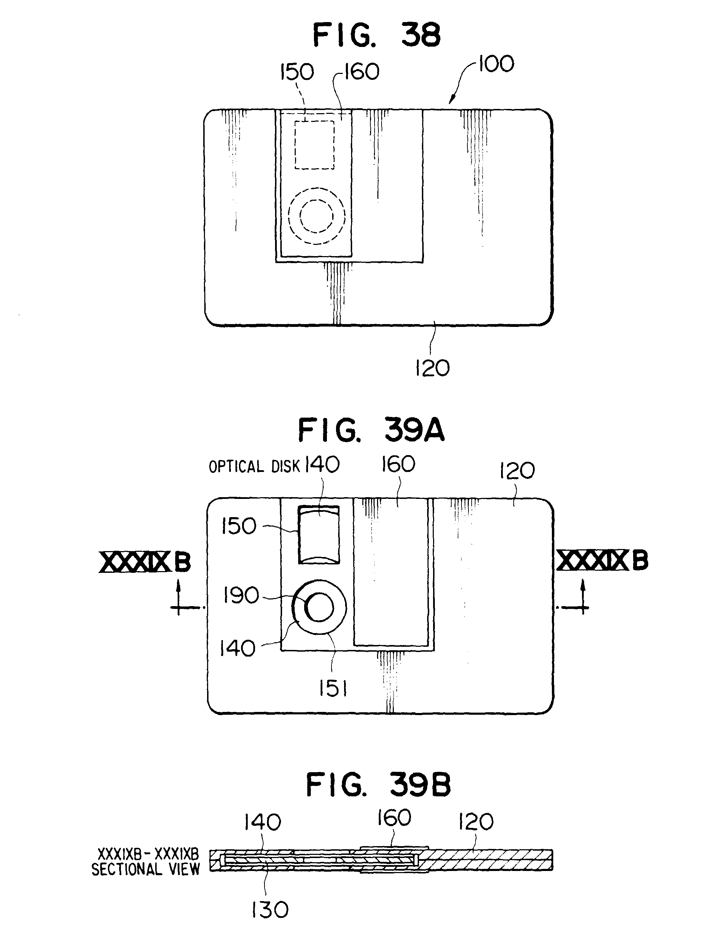

Fig. 38 shows an embodiment of optical disk-in-card 100 best suited for realizing the present invention. As shown in the figure, the optical disk medium 140 is incorporated in a protective case 120, 121 of a card size in the present optical disk-in-card 100. Further, in the protective cases, a window 150 is provided for another incidence of light, and the optical disk is usually covered with a cover 160. Here, when the optical disk-in-card 100 is set to the drive 200, the window cover 160 of the protective case is opened and light is made incident directly to the substrate of the optical disk, and a magnetic field generating means is used while allowing it to come near to the optical disk in the case of a magneto-optical disk. Fig. 39A and Fig. 39B show an external appearance of the optical disk-in-card 100 when the window cover 160 is opened. When the window cover 160 is opened, the optical disk 140 is exposed, and the optical head is able to make access directly to the optical disk.

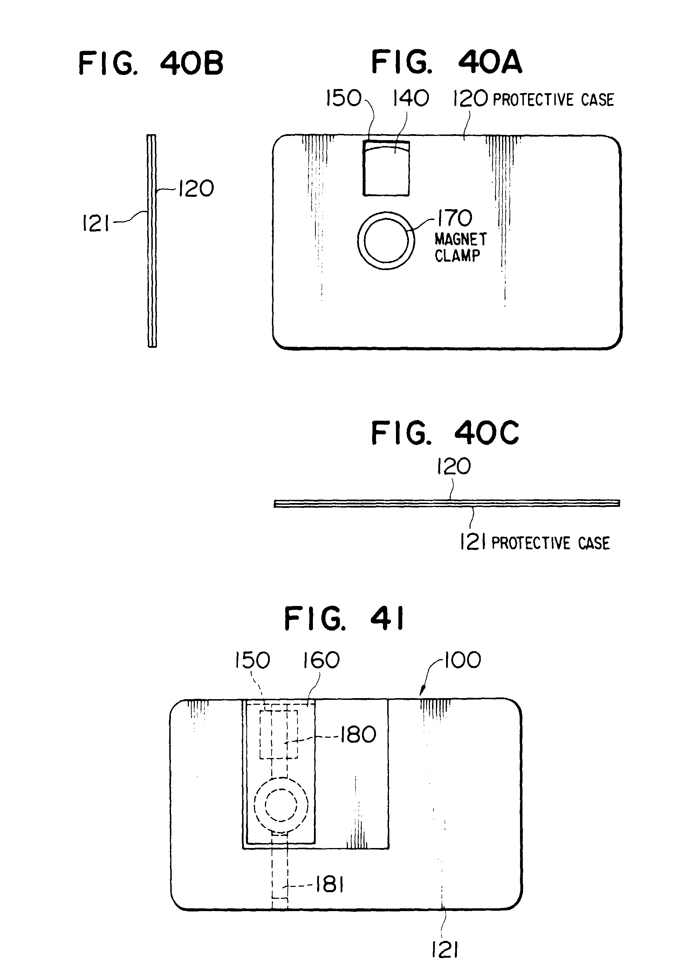

Fig. 40A, Fig. 40B and Fig. 40C show an embodiment in which the optical disk memory is rotated by means of a magnet clamp. For further details, this embodiment is similar to that shown in Fig. 21A.

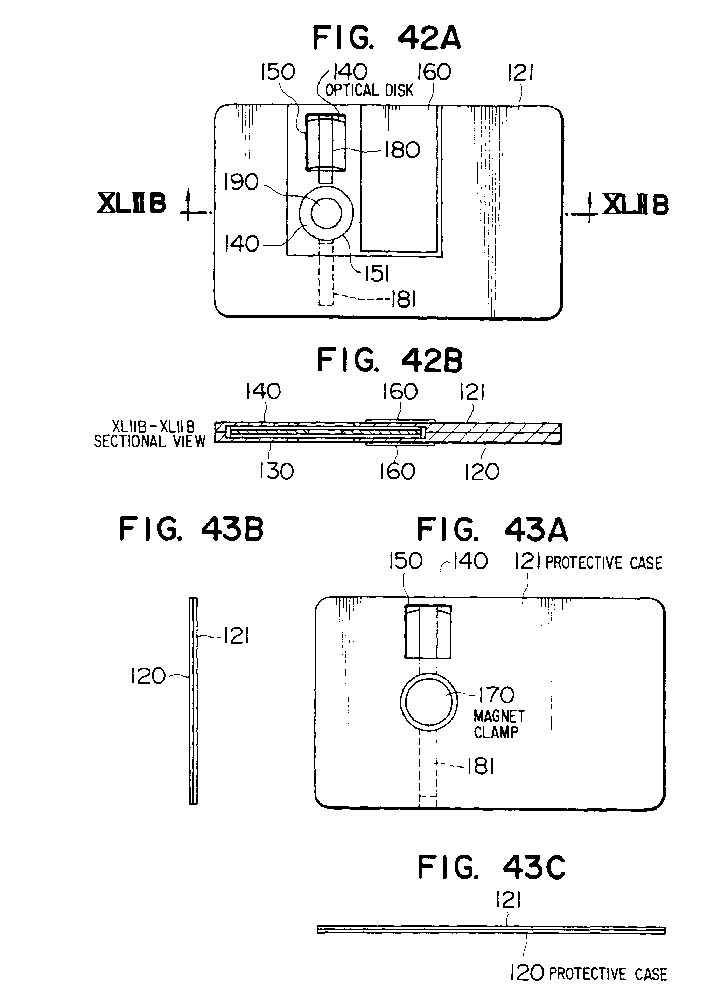

Fig. 41 shows an embodiment of the magneto-optical disk-in-card 100 best suited realizing the present invention. As shown in the figure, in the present magneto-optical disk-in-card 100, the optical disk medium 140 is incorporated in the protective case 120, 121 of a card size. Further, a window 150 is provided in the protective case for another incidence of light, and the optical disk is usually covered with a window cover 160. Here, when the optical disk-in-card 100 is set to the drive 200, the window cover 160 of the protective case is opened and light is made incident directly to the substrate of the optical disk, and a magnetic field generating means is used while allowing it to come near to the optical disk in the case of a magneto-optical disk. Fig. 42A and Fig. 42B show an external appearance of the optical disk-in-card 100 when the window cover 160 is opened. When the window cover 160 is opened, the optical disk 140 is exposed, and the optical head is able to make access directly to the optical disk.

Fig. 43A, Fig. 43B and Fig. 43C show an embodiment in which the optical disk memory of Fig. 23 is rotated by means of a magnet clamp. For further details, this embodiment is similar to that shown in Fig. 28A.

## Claims

1. A magneto-optical disk medium comprising
- a disk-shaped magneto-optical recording medium (140) composed of at least a transparent substrate (130) and a recording layer (145; 145-1) for writing, reading or overwriting information by laser power and magnetic fields
and
- a protective case (120, 121) in which said recording medium (140) is mounted rotatably so as to form a narrow gap between a surface of the recording medium and an inside surface of the protective case for maintaining the recording medium substantially in parallel therebetween and limiting the recording medium against rotation fluctuation, said case having a light incident window (152) for irradiating a laser beam to said recording layer via said transparent substrate,
characterized in
that said light incident window (152) is formed of a transparent material and the total of the plate thickness (dl) of said transparent substrate (130) and the plate thickness (d2) of said case at the light incident window is approximately 1.2 mm.

2. The magneto-optical disk medium according to claim 1, wherein
the recording medium (140) further comprises an auxiliary recording layer (145-2) and the case (120, 121) includes a first magnetic field application means (181) for initializing said auxiliary recording layer and a second magnetic field application means (180) for recording information in the recording layer (145-1).

3. The magneto-optical disk medium according to claim 2, wherein
the second magnetic field application means (180) is arranged on a side (121) of said case (120, 121) which is opposite to the side provided with the light incident window (152).

4. The magneto-optical disk medium according to one of the claims 1 to 3, wherein said protective case (120, 121) has the size of a credit card.

5. The magneto-optical disk medium according to one of the claims 1 to 4, wherein said magneto-optical recording medium (140) has 48 to 54 mm in diameter and more than 10 MB in recording capacity.

6. The magneto-optical disk medium according to one of the claims 1 to 4,
wherein said magneto-optical recording medium (140) has 304.8 mm (12 inches), 203.2mm (8 inches), 133.35 mm (5.25 inches) 127.5 mm (5 inches) or 88.9 mm (3.5 inches) in diameter.

## Patentansprüche

1. Magnetooptische Diskette mit
- einem scheibenförmigen magnetooptischen Aufzeichnungsmedium (140), das wenigstens aus einem transparenten Substrat (130) und einer Aufzeichnungsschicht (145; 145-1) zum Schreiben, Lesen oder Überschreiben von Information durch Laserleistung und Magnetfelder aufgebaut ist, und
- einem Schutzgehäuse (120, 121), in dem das Aufzeichnungsmedium (140) so drehbar angeordnet ist, daß sich zwischen einer Oberfläche des Aufzeichnungsmediums und einer Innenfläche des Schutzgehäuses ein enger Spalt ergibt, um das Aufzeichnungsmedium dazwischen im wesentlichen parallel zu halten und in seiner Rotationsfluktuation zu begrenzen, wobei das Gehäuse ein Lichteintrittsfenster (152) zum Einstrahlen eines Laserstrahls durch das transparente Substrat hindurch auf die Aufzeichnungsschicht aufweist,
dadurch gekennzeichnet,
daß das Lichteintrittsfenster (152) aus einem transparenten Material hergestellt ist und der Gesamtwert aus der Plattendicke (dl) des transparenten Substrats (130) und der Plattendicke (d2) des Gehäuses am Lichteintritssfenster etwa 1,2 mm beträgt.

2. Magnetooptische Diskette nach Anspruch 1, bei der
das Aufzeichnungsmedium (140) zusätzlich eine Hilfsaufzeichnungsschicht (145-2) aufweist und das Gehäuse (120, 121) eine erste Magnetfeldanlegeeinrichtung (181) zum Initialisieren dieser Hilfsaufzeichnungsschicht und eine zweite Magnetfeldanlegeeinrichtung (180) zum Aufzeichnen von Information in der Aufzeichnungsschicht (145-1) enthält.

3. Magnetooptische Diskette nach Anspruch 2, bei der
die zweite Magnetfeldanlegeeinrichtung (180) auf einer Seite (121) des Gehäuses (120, 121) angeordnet ist, die der mit dem Lichteintrittsfenster (152) versehenen Seite gegenüberliegt.

4. Magnetooptische Diskette nach einem der Ansprüche 1 bis 3, bei der
das Schutzgehäuse (120, 121) die Größe einer Kreditkarte aufweist.

5. Magnetooptische Diskette nach einem der Ansprüche 1 bis 4, bei der
das magnetooptische Aufzeichnungsmedium (140) im Durchmesser 48 bis 54 mm mißt und mehr als 10 MB Aufzeichnungskapazität aufweist.

6. Magnetooptische Diskette nach einem der Ansprüche 1 bis 4, bei der
das magnetooptische Aufzeichnungsmedium (140) im Durchmesser 304,8 mm (12 Zoll), 203,2 mm (8 Zoll), 133,35 mm (5,25 Zoll), 127,5 mm (5 Zoll) oder 88,9 mm (3,5 Zoll) mißt.

## Revendications

1. Support formant disque magnéto-optique comportant
un support d'enregistrement magnéto-optique en forme de disque (140) constitué d'au moins un substrat transparent (130) et d'une couche d'enregistrement (145, 145-1) pour écrire, lire ou écraser des informations par énergie laser et champs magnétiques, et
un boîtier protecteur (120, 121) dans lequel est monté de manière rotative ledit support d'enregistrement (140) de manière à former un espace étroit entre une surface du support d'enregistrement et une surface intérieure du boîtier protecteur pour maintenir le support d'enregistrement pratiquement parallèle entre celles-ci et limiter le support d'enregistrement à l'encontre d'une fluctuation en rotation, ledit boîtier ayant une fenêtre de réception de lumière (152) destinée à faire rayonner un faisceau laser sur ladite couche d'enregistrement via ledit substrat transparent,
caractérisé en ce que
ladite fenêtre de réception de lumière (152) est constituée d'un matériau transparent et le total de l'épaisseur de plaque (d1) dudit substrat transparent (130) et de l'épaisseur de plaque (d2) dudit boîtier au niveau de la fenêtre de réception de lumière est d'approximativement 1,2 mm.

2. Support formant disque magnéto-optique selon la revendication 1, dans lequel le support d'enregistrement (140) comporte de plus une couche d'enregistrement auxiliaire (145-2) et le boîtier (120, 121) comporte des premiers moyens d'application de champ magnétique (181) destinés à initialiser ladite couche d'enregistrement auxiliaire et des seconds moyens d'application de champ magnétique (180) destinés à enregistrer des informations dans la couche d'enregistrement (145-1).

3. Support formant disque magnéto-optique selon la revendication 2, dans lequel lesdits seconds moyens d'application de champ magnétique (180) sont agencés sur un côté (121) dudit boîtier (120, 121) qui est opposé au côté muni de la fenêtre de réception de lumière (152).

4. Support formant disque magnéto-optique selon l'une quelconque des revendications 1 à 3, dans lequel ledit boîtier protecteur (120, 121) a la dimension d'une carte de crédit.

5. Support formant disque magnéto-optique selon l'une quelconque des revendications 1 à 4, dans lequel ledit support d'enregistrement magnéto-optique (140) a un diamètre de 48 à 54 mm et une capacité d'enregistrement supérieure à 10 Mo.

6. Support formant disque magnéto-optique selon l'une quelconque des revendications 1 à 4, dans lequel ledit support d'enregistrement magnéto-optique (140) a un diamètre de 304,8 mm (12 pouces), 203,2 mm (8 pouces), 133,35 mm (5,25 pouces), 127,5 mm (5 pouces) ou 88,9 mm (3,5 pouces).
